# EUROPEAN PATENT APPLICATION

(11) **EP 2 902 862 A1**
(43) Date of publication of application: **05.08.2015**
(21) Application number: 14382031.4
(22) Date of filing: 30.01.2014
(51) Int. Cl.: G05B 19/418, B25J 9/00

(54) **Control device and method for controlling motion of a machine, motion program and recording medium storing the same**

(71) Applicant: OMRON CORPORATION, Kyoto-shi, Kyoto 600-8530 (JP)
(72) Inventor: Arcas, David, 08019 Barcelona (ES); Carlas, Ferran, 08019 Barcelona (ES); De Robbio, Eduardo, 08019 Barcelona (ES); Escudero, Diego, 08019 Barcelona (ES); Jovanovic, Igor, 08019 Barcelona (ES); Sanchez, Josep, 08019 Barcelona (ES)
(74) Representative: Horn Kleimann Waitzhofer Patentanwälte PartG mbB

(57) **Abstract**

A control device (1) for a machine (9) operating in association with a conveyor (6) is provided. The control device (1) comprises a synchronization offset motion program (SyncOffset, SyncConveyorOffset) and a user program for providing an offset value (35) corresponding to a movement of the machine (9) relative to the conveyor (6), and for enabling the synchronization offset motion program (SyncOffset, SyncConveyorOffset); a processing means (100) configured to execute the user program, and furthermore configured to repeatedly execute the synchronization offset motion program (SyncOffset, SyncConveyorOffset) in each of the generated control cycles after the user program has enabled it, in order to calculate an offset motion command value by adding the offset value (35) to a synchronization motion command value (36); and an output means to output the offset motion command value (37) in each of the generated control cycles to the machine (9).

## Description

### FIELD OF THE INVENTION

The present invention relates to a control device for controlling motion of a machine and a corresponding method for controlling motion of a machine. The invention further relates to a synchronization offset motion program to be used in a control device and a recording medium for storing a synchronization offset motion program.

### BACKGROUND OF THE INVENTION

In many factories, robots are used to manipulate workpieces being conveyed by a conveyor. An example of such a robot system is shown in WO 2010/062609 A1 illustrating a food product handling system.

When handling or manipulating workpieces, the tool position of a robot might need to be changed to be synchronized with a movement of the conveyor. Thus, a movement of the conveyor should be traced. A synchronization of a tool unit position of a robot and a movement of a conveyor is disclosed in US 6646404 B2.

In order to synchronize a tool unit position of a robot with the movement of a conveyor, the robot or machine is typically controlled by a control device. An example of a control device for controlling the tool unit position of a robot is disclosed in EP 2515189 A1.

Some applications require moving the robot relative to the workpiece during the synchronization movement of the tool unit and the conveyor. That means that the robot, or a tool unit of the robot, keeps its position on or over a specific position of the workpiece during synchronization movement by a regular control for synchronization.

Further, users may provide a program, also referred to below as "user program", to control a machine such as a robot using motion commands. A motion command is a command or instruction used in user programs to call (initiate) a corresponding motion program. Such motion programs may be desired to be used during synchronization movement of the robot and the conveyor. Some motion commands for the relative movement or superimposed movement during synchronization are provided in the market. However, they are limited to simple movements such as a superimposed linear movement or superimposed circular movement, and it is difficult to implement complex movements.

Further, the user programs have to be changed when the superimposed movements, i.e. the movements in relation to the workpiece, need to be changed. If it is desired to automatically change the superimposed movements in accordance with detected situations in real-time, many options of superimposed movements need to be programmed in advance. Each option of superimposed movements would need to be programmed by combining the motion commands.

### SUMMARY OF THE INVENTION

It is one object of the present invention to provide a simple approach of controlling motion of a machine in relation to a moving conveyor.

Accordingly, a control device for controlling motion of a machine is provided, the machine having a plurality of degrees of freedom of movement and operating in association with a conveyor. The control device comprises a control cycle generator configured to generate control cycles; a conveying position obtaining means configured to obtain a conveying position of the conveyor; a first storage configured to store a synchronization offset motion program; a second storage configured to store a user program for providing an offset value for at least one of the degrees of freedom of movement, the offset value corresponding to a movement of the machine relative to the conveyor, and for enabling the synchronization offset motion program; a processing means configured to execute the user program, and furthermore configured to repeatedly execute the synchronization offset motion program in each of the generated control cycles after the user program has enabled the synchronization offset motion program, the synchronization offset motion program being configured: to obtain a synchronization motion command value for at least one of the degrees of freedom of movement for operating the machine in synchronization with the conveying position, and to determine an offset motion command value, the synchronization offset motion program calculating the offset motion command value by adding the offset value provided by the execution of the user program to the synchronization motion command value, and an output means configured to output the offset motion command value in each of the generated control cycles to the machine.

Here, "program" refers to a series of instructions that can be executed by a processing means, such as a CPU of a controller or the like. The program may be represented in digital form and is storable on a storage medium, which may be a volatile or non-volatile storage or recording medium, such as a CD, DVD, flash memory, hard disk, or other program product. Furthermore, the program may also be stored distributed form in a so-called cloud or the like. The program may also be a subroutine of a superordinate program, in other words, the program may be part of a larger program or launched by another program.

The synchronization offset motion program is a kind of motion program. In the above-described control device, the motion program is enabled by the user program. The motion program may be represented as a command in source code of the user program. The user program may provide data such as a target position to the motion program. The motion program generates motion command values based on the data, if any, and provides the motion command values to the machine in every control cycle. It should be noted that it is also possible to provide a plurality of motion programs, each having a predetermined, distinctive functionality. For example, one motion program may provide the functionality for synchronizing the machine with a given workpiece, and another motion program may provide the functionality for providing a superimposed motion, i.e. a motion relative to the workpiece while the workpiece is moving on the conveyor and the machine is synchronized with the workpiece. Here, "synchronized" may mean for example that a part of the machine (such as a tool of the machine or the end of a robot arm or the like) stays in a predetermined spatial relationship with the workpiece. Here, "spatial relationship" may refer to a positional and rotational relationship, for example. Thus, in the synchronized state, the machine tool or robot arm or the like moves together with the workpiece, as the workpiece moves on the conveyor.

"Obtain a synchronization motion command value" may refer to receiving, reading in or calculating a synchronization motion command value.

For each degree of freedom of movement, a separate motion value may be used. However, in the context of the invention, "value" may also refer to a plurality of values, each value being applicable for one degree of freedom of movement.

"Conveying position" may refer to a virtual point on the conveyor, whose position is indicated in relation to a universal coordinate system (or in relation to a fixed point of the machine).

"Repeatedly execute the motion program in each of the generated control cycles" may mean for example that the motion program is executed once in each of the plurality of generated control cycles."

The "control cycle generator" may be a timer which generates interrupt signals at predetermined (e.g. constant) intervals. The processing means may determine the control cycles in accordance with the interrupt signals.

Furthermore, "machine" may refer to, for example, a robot for handling objects, and in particular a tool unit of a robot, but there is no limitation to this.

"Processing means" may refer to any kind of processing unit in a control device. Such a processing unit may be for example a CPU.

"Storage" may refer to any kind of storage unit being able to store the user program and the motion program. The first storage and the second storage may be two separate storages but may also be two separate storage regions in one storage. Output means in this context may refer to any kind of output unit or terminal being adapted to output the motion command value to the machine to control the motion of the machine.

According to the proposed control device, the position of a tool, such as an arm, of a machine, for instance a robot, is synchronized with a movement of a conveyor. In addition, using an offset value, movements in relation to the object on the conveyor, for instance a workpiece, can be performed. This is repeated for every control cycle. Accordingly, the offset values are variable and can be set when executing the user program. Thus, a dynamic change of the offset values by the user program is possible.

Based on the proposed control device, the offset motion command value is determined in each control cycle. The synchronization offset motion program is configured to obtain a synchronization motion command value for operating the machine in synchronization with the conveying position. The synchronization offset motion program is further configured to determine the offset motion command value by adding the offset value provided by the execution of the user program to the synchronization motion command value. As a superimposed movement, i.e. the movement of the machine in relation to an object (e.g. workpiece) on the conveyor is superimposed as the offset value over the synchronization motion command value (i.e. the command value for synchronizing the machine with the conveyor); also complex movements of the machine in relation to the object can be carried out.

The control device may be used in any kind of factory where a movement of a machine, for instance a robot, needs to be synchronized with a movement of a conveyor and, at the same time, the robot should perform a movement in relation to an object located on the conveyor. Such factories can be for instance cake factories, where a cake is decorated using a robot, packaging machines, where objects such as yogurts, pizzas, cookies or the like are packed, or any other kind of factory requiring complex movements of a robot in relation to an object located on a moving conveyor.

In order to determine the current conveying position, the position of a fixed reference point of the conveyor can be determined. For instance, a rotary encoder or any other kind of sensing device can monitor the conveyor and detect the reference point. The reference point can be an imaginary point.

According to a further embodiment, the relative position of the object is a position of a reference point of the object in relation to a reference point of the conveyor. If the form of the object is known, a fixed reference point can be used to determine the position of the object, including the boundaries of the object, on the conveyor.

According to a further embodiment, the synchronization offset motion program is further configured to receive the conveying position and calculate the synchronization motion command value based on the conveying position to obtain the synchronization motion command value. Accordingly, the synchronization offset motion program including a functionality of calculating the synchronization motion command value requires less programming of users.

According to a further embodiment, the processing means is configured to provide the offset value in each of the control cycles by executing the user program. Accordingly, a new offset value is provided in each control cycle, ensuring a smooth superimposed movement.

According to a further embodiment, the control device further comprises a communication interface configured to receive a sequence of offset values. Using such a communication interface, it is possible to receive a sequence of offset values generated outside of the control device.

According to a further embodiment, the control device further comprises a third storage storing a sequence of offset values. When storing a sequence of offset values, the processing means can directly access the stored offset values instead of generating an offset value when executing the user program.

According to a further embodiment, when the user program has enabled the synchronization offset motion program, the synchronization offset motion program calculates, during a single enablement, a sequence of offset motion command values based on the offset values provided by the user program. With this embodiment, given the appropriate offset values, the synchronization offset motion program may cause a non-linear movement of the machine based on the sequence of offset motion command values, and this non-linear movement can be programmed with only a single motion command.

According to a further embodiment, the user program changes the offset value in response to an input from outside the control device. For example, the user program may change the offset value in response to an input from a sensor or in response to a user input.

According to a further embodiment, the synchronization offset motion program is stored in the first storage, and the user program is stored in the second storage.

According to a further aspect, a method for controlling motion of a machine is provided, the machine having a plurality of degrees of freedom of movement and operating in association with a conveyor. The method comprises generating control cycles; obtaining a conveying position of the conveyor; executing a user program for providing an offset value for at least one of the degrees of freedom of movement, the offset value corresponding to a movement of the machine relative to the conveyor, the user program enabling a synchronization offset motion program over a period of time; repeatedly executing the synchronization offset motion program in each of the generated control cycles after the user program has enabled the synchronization offset motion program, the synchronization offset motion program obtaining a synchronization motion command value for at least one of the degrees of freedom of movement for operating the machine in synchronization with the conveying position, and determining an offset motion command value, the synchronization offset motion program calculating the offset motion command value by adding the offset value provided by the execution of the user program to the synchronization motion command value, and outputting the motion command value in each of the generated control cycles to the machine.

According to a further embodiment, the method for controlling motion of a machine further comprises generating the offset value by using a sensor and providing the offset value to the user program and/or the synchronization offset motion program.

According to a further aspect, a synchronization offset motion program which is designed to be executed cyclically by a control device for controlling motion of a machine as described above is provided, the machine having a plurality of degrees of freedom of movement and operating in association with a conveyor, the control device being configured to execute a user program which determines a motion of the machine, the control device being configured to output an offset motion command value for each of the degrees of freedom of movement. The synchronization offset motion program comprises a first logical interface for receiving an enable instruction from the user program, a second logical interface for receiving an offset value from the user program, an obtaining means for obtaining a synchronization motion command value for at least one of the degrees of freedom of movement for operating the machine in synchronization with a conveying position of the conveyor, and a calculating routine for obtaining an offset motion command value to be output from the control device by adding the offset value provided by the execution of the user program to the synchronization motion command value.

A "logical interface" in this context refers to an interface being able to interconnect between the user program and the motion program for transmitting commands, instructions, status or data between these programs. A logical interface may be an argument of the synchronization offset motion program or a global variable commonly accessed from both the user program and the synchronization offset motion program. A logical interface may correspond to a terminal of a representation, which is used in a ladder chart, of the synchronization offset motion program. Here, the ladder chart is a possible expression of a source program of the user program.

An "obtaining means" in this context may be a logical interface or a routine for receiving or calculating a synchronization motion command value so that the machine is synchronized with the conveyor.

According to a further aspect, a motion program for a control device as described above is provided. The motion program performs the following steps when being executed on the processing means of the control device: obtaining a synchronization motion command value for at least one of the degrees of freedom of movement for operating the machine in synchronization with a conveying position of the conveyor; receiving an offset value from the user program; calculating an offset motion command value by adding the offset value to the synchronization motion command value; and outputting the offset motion command value.

According to a further aspect, a recording medium storing the above-described synchronization offset motion program is provided.

The synchronization offset motion program may be embodied as a memory card, USB stick, CD-ROM, DVD or as a file which may be downloaded from a server in a network. For example, such a file may be provided by transferring the file comprising the synchronization offset motion program from a wired or wireless communication network.

The embodiments and features described with reference to the control device of the present invention apply mutatis mutandis to the method of the present invention.

Further possible implementations or alternative solutions of the invention also encompass combinations-that are not explicitly mentioned herein - of features described above or below with regard to the embodiments. The person skilled in the art may also add individual or isolated aspects and features to the most basic form of the invention.

Further embodiments, features and advantages of the present invention will become apparent from the subsequent description and dependent claims, taken in conjunction with the accompanying drawings, in which:

### BRIEF DESCRIPTION OF THE DRAWINGS

Figure 1 shows a factory system comprising a conveyor, robot and a control device;
Figure 2 shows an example of a configuration of a control device system including the control device;
Figure 3 shows an example of a hardware configuration of the control device;
Figure 4 shows an example of a software configuration of the control device;
Figure 5 shows a sequence diagram of an example of a process of a motion control based on a motion program and a user program;
Figure 6 shows an example of a data flow diagram of a command position data;
Figure 7 shows an example of an arrangement of a conveyor with a workpiece;
Figure 8 shows a flowchart of an example of a user program;
Figure 9 (a) shows a flowchart of an example of a synchronization motion program (SyncConveyor) and Fig. 9(b) shows a flowchart of an example of a synchronization offset motion program (SyncOffset). Figs. 9 (c) and 9 (d) respectively show variants of SyncConveyor and SyncOffset.
Figure 10 (a) shows a ladder program representation of the synchronization motion program (SyncConveyor) and Fig. 10 (b) shows a ladder program representation of the synchronization offset motion program (SyncOffset) of Fig. 9;
Figure 11 shows a flowchart of a further example of a user program;
Figure 12 (a) shows a flowchart of another synchronization offset motion program (SyncConveyorOffset) and Fig. 12 (b) shows a variant of SyncConveyorOffset;
Figure 13 shows a ladder program representation of the offset motion program of Fig. 12 (a);
Figure 14 shows an example of an arrangement of a conveyor with a workpiece according to a comparative embodiment;
Figure 15 shows a flowchart of an example of a user program according to a comparative embodiment;
Figure 16 (a) shows a flowchart of an example of a comparative synchronization motion program (SyncRef) and Fig. 16 (b) shows a flowchart of an example of a comparative superimposed movement program (SuperMoveX or SuperMoveY) of Fig. 15;
Figure 17 shows an example of a hardware configuration of a setting device; and
Figure 18 shows an example of a software configuration of the setting device.

In the figures, like reference numerals designate like or functionally equivalent elements, unless otherwise indicated.

### EMBODIMENTS OF THE INVENTION

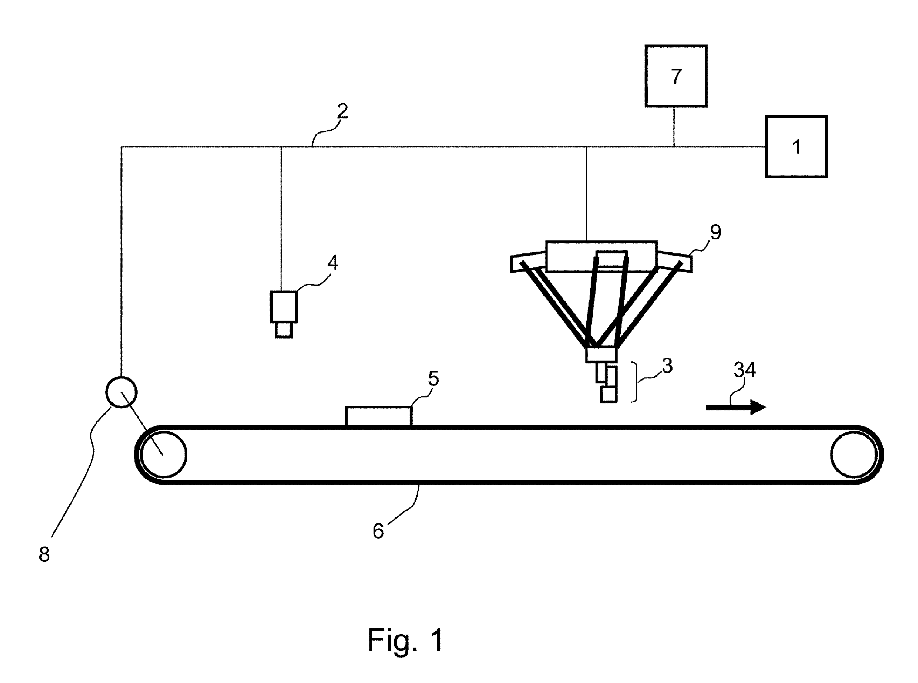

Fig. 1 shows a factory system comprising a conveyor 6, a robot (i.e. a machine) 9 and a control device 1. The control device 1 is adapted to control a motion of a machine, in this case the robot 9, in particular of the tool unit 3 of the robot 9 in relation to the conveyor 6, which is for example a belt conveyor.

The robot 9 may be a delta robot, but also any other kind of robot types, such as articulated robots, Cartesian coordinate robots and SCARA robots, can be used. The robot 9 has the tool unit 3 to manipulate or process the workpiece 5 which is located on the conveyor 6. In this example, the robot 9 has three degrees of freedom of movement (x, y, z) and the tool unit 3 has additional three degrees of freedom of movement (three wrist angles).

A vision sensor 4 having a camera detects the position and shape of the workpiece 5 when the workpiece 5 passes through the viewing field of the camera of the vision sensor 4. A position detector 8 which may include a rotary encoder determines a current position of the conveyor 6.

A HMI (Human Machine Interface) device 7 is used for providing instructions of operators to the control device 1 and displaying data from the control device 1 on the screen of the HMI device 7. All devices of the factory or application system can communicate via a field network 2.

Some examples of the application system are:
- Packaging food products, e.g. having oval shape, in a cuboid box by a robot while the box is conveyed. Each food product is put one by one at its proper position in the box, depending on the shapes of the products and the box.
- Packaging application without picking action: there are two conveyors; one moves the product and the other one moves a plurality of boxes located one behind the other. The products are moving on the first conveyor and the robot is synchronized and pushes the product on the first conveyor into the boxes.
- Applying glue on products moving on a conveyor.
- Decorating cakes by adding cream or chocolate with different kind of drawings.
- Decapitating shrimp: the shrimps are moving on a conveyor and the robot cuts off their heads while being synchronized with the conveyor. After the cut, the head of the shrimp must be separated from the body (while in synchronization) and rotated properly. This will create a line of heads that will be ejected in a future step.

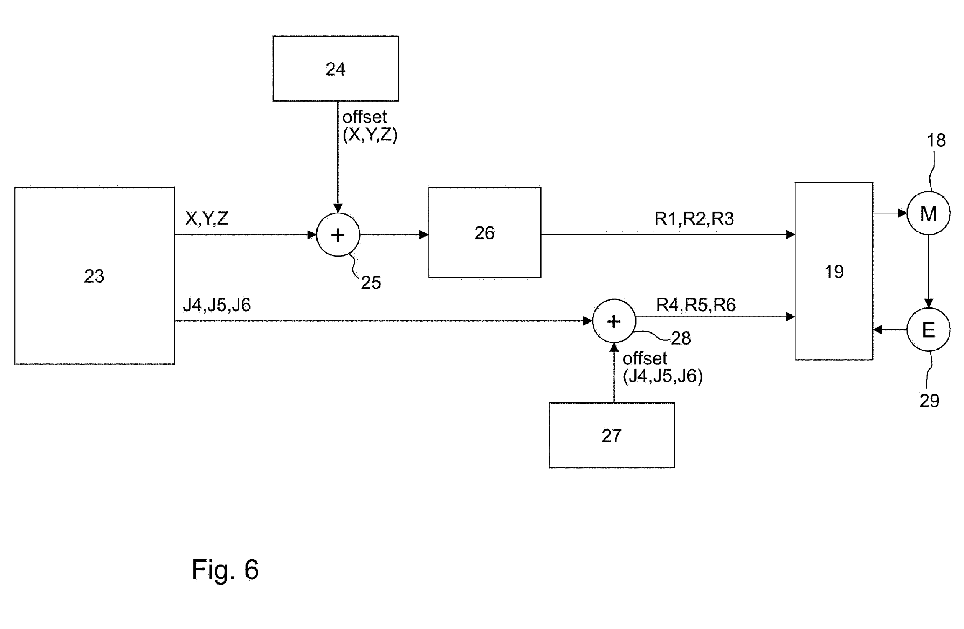

A detailed description of the control of the machine for such applications is described below with reference to Figs. 6 - 13.

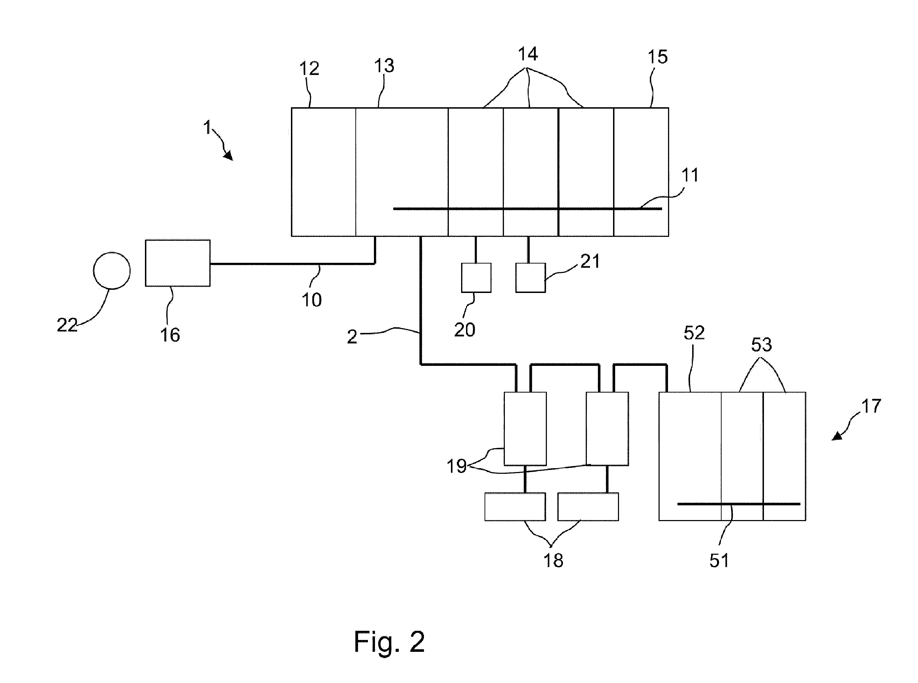

Fig. 2 shows an example of a configuration of a control device system including the control device 1. A control device 1 according to this embodiment has a motion control function for controlling a motor movement in order to move the robot 9 and the tool unit 3 of the robot 9. A motion control function is provided by a combination of a user program and a motion program according to the herein described control device 1. The motion program is adapted to control directly the motion of the machine or robot 9. The user program is adapted to enable the motion program and to provide an offset value in case that a superimposed movement should be performed. While the motion program is enabled by the user program, the motion program is executed during each control cycle, until the motion program is disabled by the user program.

First, a system configuration of the control device 1 of this embodiment will be described with reference to Fig. 2. The control device system includes the control device 1, servo motor drivers 19 and a remote IO terminal 17 which are connected to the control device 1 via a field network 2, and a detection switch 20 and a relay 21 which are field devices. A setting device 16 can also be connected to the control device 1 via a connection cable 10 or the like.

The control device 1 includes a CPU unit 13 which executes a main operation process, one or more IO units 14, and a special unit 15. These units are configured to exchange data via a control device system bus 11. Power of an appropriate voltage is supplied to these units by a power supply unit 12. Note that the units constituting the control device 1 may be provided by a control device manufacturer, in which case the control device system bus 11 may be according to proprietary technology by the control device manufacturer. In contrast to this, as described below, the field network 2 may be configured to comply with a standard so that products available from different manufacturers can be connected via the field network 2.

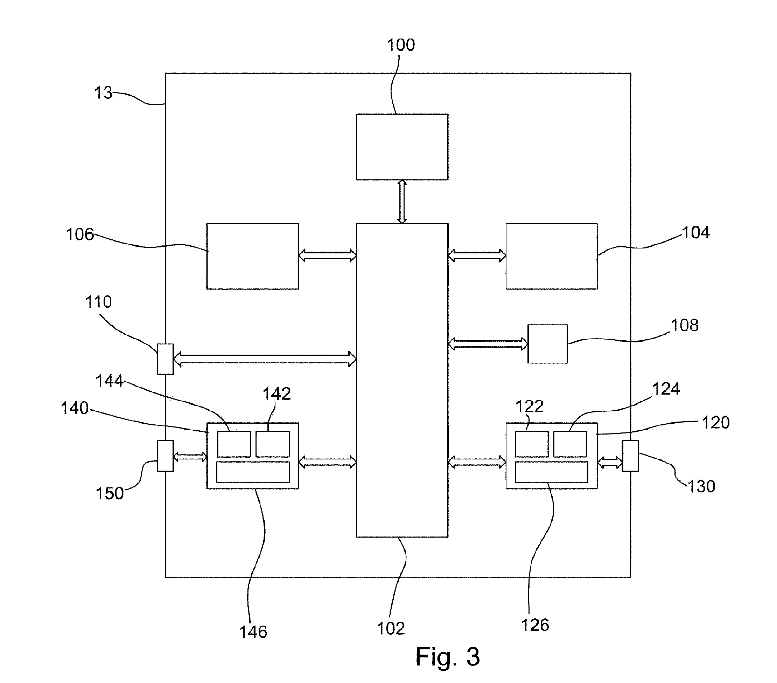

Details of the CPU unit 13 will be described below with reference to Fig. 3. The CPU unit 13 mainly controls an object of control, such as motors or servo units of the robot 9 etc.

The IO units 14 are units which are related to a general input/output process and are used to input and output binary data (on and off). Specifically, the IO units 14 collect information indicating whether a sensor, such as the detection switch 20 etc., is in a state (on) in which the sensor has detected an object 5 or in a state (off) in which the sensor has detected no object. The IO units 14 also have a function of outputting a command (on) for activation and a command (off) for inactivation to an output destination, such as the relay 21 or an actuator.

The special unit 15 has functions which are not supported by the IO unit 14, such as inputting and outputting of analog data, control of temperature, and communication using a specific communication scheme.

The field network 2 transmits various kinds of data which are exchanged with the CPU unit 13. As the field network 2, typically, various kinds of industrial Ethernet (registered trademark) networks are available. Examples of industrial Ethernet (registered trademark) networks include EtherCAT (registered trademark), Profinet IRT, MECHATROLINK (registered trademark)-III, Powerlink, SERCOS (registered trademark)-III, CIP Motion, etc. Any of these Ethernet technologies may be employed. Field networks other than industrial Ethernet (registered trademark) may be employed. For example, DeviceNet, CompoNet/IP (registered trademark), etc. may be employed as well. In the control device system of this embodiment, typically, in this embodiment, a configuration will be illustrated in which EtherCAT (registered trademark), which is a type of industrial Ethernet (registered trademark), is employed as the field network 2.

Although Fig. 2 illustrates a control device system that has both a control device system bus 11 and a field network 2, a system configuration which has only one of these may be employed. For example, all units may be connected together via the field network 2. Alternatively, the servo motor drivers 19 may be connected directly to the control device system bus 11 without using the field network 2. Moreover, a communication unit of the field network 2 may be connected to the control device system bus 11, and the CPU unit 13 may communicate with devices connected to the field network 2 via the communication unit.

Note that if the CPU unit 13 includes the functionality of the IO units 14 and the functions of the servo motor drivers 19, the control device 1 may be configured so that the CPU unit 13 directly controls an object of control without using the IO units 14, the servo motor drivers 19, or the like.

The servo motor drivers 19 are connected via the field network 2 to the CPU unit 13, and drive the servo motors 18 based on command values from the CPU unit 13. The CPU unit 13 may generate command values, such as a motion command value for the robot 9, based on a user program and a motion program as will be described below in further detail.

More specifically, the servo motor drivers 19 receive motion command values, such as position command values, speed command values, and torque command values, from the control device 1 at predetermined intervals. The servo motor drivers 19 also acquire measured values related to an operation of the servo motors 18, such as a position, a speed (typically, calculated from the difference between the current position and the previous position), and a torque, from detectors, such as a position sensor (rotary encoder) and a torque sensor, which are connected to the shafts of the servo motors 18. The servo motor drivers 19 perform a feedback control, where the target values are the command values from the CPU unit 13, and the feedback values are the measured values.

The setting device 16 may receive instructions from a user, in particular in form of a user program, via a CD-ROM 22. The user program, which will be described below, defines motions of the robot 9 to be carried out in relation to the conveyor 6 or the workpiece 5, for example. These motions (or more precisely, the instructions to carry out these motions) are provided via the CPU unit 13, after processing, to the servo motor drivers 19 and the servo motors 18.

While Fig. 2 shows an example system in which servo motors 18 are combined with servo motor drivers 19, other configurations may be employed. For example, a system in which pulse motors are combined with pulse motor drivers may be employed.

A remote IO terminal 17 may optionally be connected to the field network 2 of the control device system of Fig. 1. The remote IO terminal 17 normally performs a process which is related to a general input/output process, as with the IO unit 14. More specifically, the remote IO terminal 17 includes a communication coupler 52 for performing a process which is related to data transmission on the field network 2, and one or more IO units 53. These units are configured to exchange data with each other via a remote IO terminal bus 51.

A hardware configuration of the CPU unit 13 will be described with reference to Fig. 3. Fig. 3 is a schematic diagram showing the hardware configuration of the CPU unit 13 of this embodiment. Referring to Fig. 3, the CPU unit 13 includes a microprocessor 100, a chip set 102, a main memory 104, a first and a second storage 106, a control cycle generator 108, a USB connector 110, a control device system bus controller 120, a control device system bus connector 130, a field network controller 140, and a field network connector 150. The chip set 102 and other components are linked together via various buses.

The microprocessor 100 and the chip set 102 are typically configured under a general-purpose computer architecture. Specifically, the microprocessor 100 interprets and executes command codes which are successively supplied from the chip set 102 based on an internal clock. The chip set 102 exchanges internal data with various components connected thereto, and produces command codes which are required by the microprocessor 100. The chip set 102 also has a function of caching, for example, data obtained as a result of execution of an operation process in the microprocessor 100.

The CPU unit 13 has, as storage means, the main memory 104 and the first and second storage 106. The main memory 104, which is a volatile storage area (RAM), holds various programs which are to be executed by the microprocessor 100 after the CPU unit 13 is powered on. The main memory 104 is also used as a working memory during execution of various programs by the microprocessor 100. Examples of the main memory 104 include DRAM (Dynamic Random Access Memory) devices and SRAM (Static Random Access Memory) devices.

The various programs include inter alia the user program and the motion program. The user program and the motion program can be stored in the first and second storage 106, respectively.

In addition, the first and second storage 106 holds, in a non-volatile manner, data such as a real-time OS (Operating System), a system program of the control device 1, system set parameters, etc. These programs and data are copied to the main memory 104 as required so that the microprocessor 100 can access them. As the first and second storage 106, a semiconductor memory such as a flash memory may be employed. Alternatively, for example, magnetic recording media (e.g., a hard disk drive etc.) and optical recording media (e.g., DVD-RAM (Digital Versatile Disk Random Access Memory) etc.) may be employed.

The control cycle generator 108 produces and provides an interrupt signal to the microprocessor 100 at predetermined intervals. Typically, based on hardware specifications, the control cycle generator 108 is configured to produce different interrupt signals at different intervals. Alternatively, the control cycle generator 108 may be set by an OS (Operating System) or a BIOS (Basic Input Output System) or the like to produce interrupt signals at suitable intervals. By using the interrupt signal produced by the control cycle generator 108, a control operation is achieved which is performed at each control cycle as described below. The length of a control cycle can be set to be not longer than 1 ms, and preferably not longer than 0.5 ms.

The CPU unit 13 has, as the communication circuit, the control device system bus controller 120 and the field network controller 140. These communication circuits transmit output data and receive input data.

Note that if the CPU unit 13 itself has the function of the IO unit 14 and the servo motor drivers 19, the communication circuit transmits output data and receives input data to and from portions of the CPU unit 13 which carry out these functions, inside the CPU unit 13.

The control device system bus controller 120 controls data exchange which is performed via the control device system bus 11. More specifically, the control device system bus controller 120 includes a DMA (Dynamic Memory Access) control circuit 122, a control device system bus control circuit 124, and a buffer memory 126. Note that the control device system bus controller 120 is internally connected via the control device system bus connector 130 to the control device system bus 11.

The buffer memory 126 functions as a transmission buffer for data (also hereinafter referred to as "output data") which is output via the control device system bus 11 to other units, and as a reception buffer for data (also hereinafter referred to as "input data") which is input via the control device system bus 11 from other units. Note that output data produced by an operation process of the microprocessor 100 is initially stored in the main memory 104. Thereafter, output data to be transferred to a specific unit is read out from the main memory 104 and temporarily held in the buffer memory 126. Input data transferred from other units is temporarily held in the buffer memory 126 before being transferred to the main memory 104.

The DMA control circuit 122 transfers output data from the main memory 104 to the buffer memory 126 and input data from the buffer memory 126 to the main memory 104. The control device system bus control circuit 124 performs a process for transmitting output data from the buffer memory 126 to other units connected to the control device system bus 11, and a process of receiving input data from other units connected to the control device system bus 11 and storing the input data into the buffer memory 126. Typically, the control device system bus control circuit 124 provides the functions of a physical layer and a data link layer of the control device system bus 11.

The field network controller 140 is internally connected via the field network connector 150 to the field network 2. The field network controller 140 controls data exchange performed via the field network 2. Specifically, the field network controller 140 controls output data transmission and input data reception based on the standard for the field network 2. As described above, in this embodiment, the field network 2 conforming to the EtherCAT (registered trademark) standard is employed, and therefore, the field network controller 140 including hardware for performing typical Ethernet (registered trademark) communication is employed. In the EtherCAT (registered trademark) standard, a typical Ethernet (registered trademark) controller which employs a communication protocol for the typical Ethernet (registered trademark) standard is available. Note that, for some types of industrial Ethernet (registered trademark) employed as a field network 2, an Ethernet (registered trademark) controller having special specifications which corresponds to a communication protocol having dedicated specifications different from those of a typical communication protocol is employed. If a field network other than industrial Ethernet (registered trademark) is employed, a dedicated field network controller corresponding to the standard is employed.

The buffer memory 146 functions as a transmission buffer for data (also hereinafter referred to as "output data") which is output via the field network 2 to other devices etc. and as a reception buffer for data (also hereinafter referred to as "input data") which is input via the field network 2 from other devices etc. As described above, output data produced by an operation process of the microprocessor 100 is initially stored in the main memory 104. Thereafter, output data which is to be transferred to a specific device is read out from the main memory 104 and temporarily held in the buffer memory 146. Input data transferred from other devices is temporarily held in the buffer memory 146 before being transferred to the main memory 104.

A DMA control circuit 142 transfers output data from the main memory 104 to the buffer memory 146, and input data from the buffer memory 146 to the main memory 104.

A field network control circuit 144 performs a process of transmitting output data of the buffer memory 146 to other devices connected to the field network 2, and a process of receiving from other devices connected to the field network 2 and storing input data into the buffer memory 146. Typically, the field network control circuit 144 provides the functions of a physical layer and a data link layer of the field network 2.

The USB connector 110 is an interface for connecting the setting device 16 and the CPU unit 13 together. Typically, for example, a program executable by the microprocessor 100 in the CPU unit 13, which is transferred from the setting device 16, is input via the USB connector 110 to the control device 1.

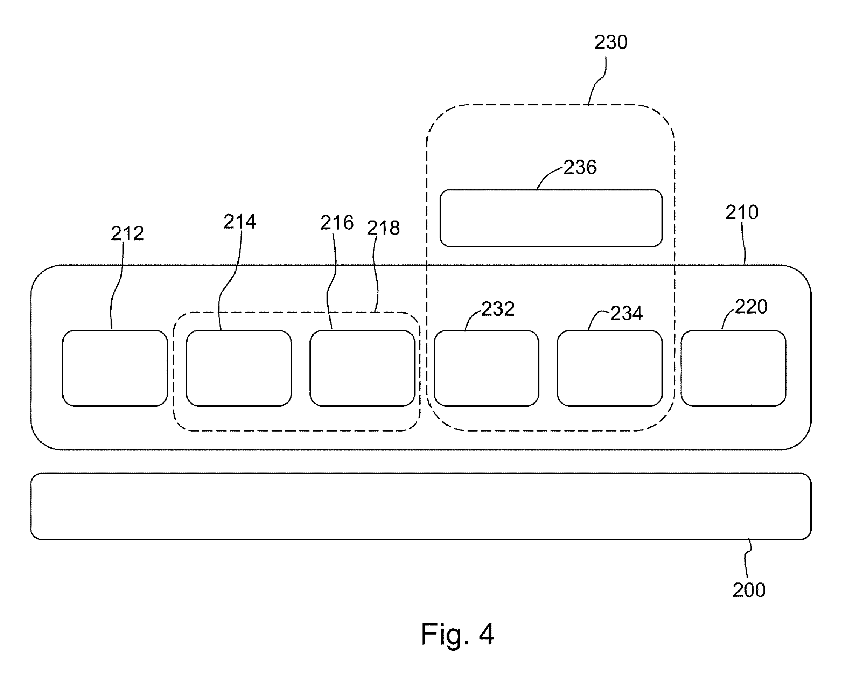

Next, pieces of software for providing various functions according to this embodiment will be described with reference to Fig. 4. Command codes contained in these pieces of software are read out with appropriate timing and executed by the microprocessor 100 of the CPU unit 13.

Fig. 4 is a schematic diagram showing a software configuration which is executed by the CPU unit 13 according to this embodiment. Referring to Fig. 4, software executable by the CPU unit 13 has a three-layer structure including a real-time OS 200, a system program 210, and a user program 236.

The real-time OS 200 is designed based on the computer architecture of the CPU unit 13. The microprocessor 100 provides a basic execution environment for executing the system program 210 and the user program 236. The real-time OS is typically available from a control device manufacturer or a specialized software company, etc.

The system program 210 includes pieces of software for providing functions of the control device 1. Specifically, the system program 210 includes a scheduler program 212, an output process program 214, an input process program 216, a sequence command operation program 232, one or more motion programs 234, and other system programs 220, for example. Note that, typically, the output process program 214 and the input process program 216 are continuously (integrally) executed, and therefore, may also be collectively referred to as an IO process program 218.

The user program 236 is produced based on the user's purpose of control. In other words, the user program 236 is suitably designed based on a line (process) to be controlled using the control device.

As described below, the user program 236 achieves the user's control purpose in cooperation with the sequence command operation program 232 and the motion program 234. Specifically, the user program 236 achieves a programmed operation by using a command, a function, a functional module, or the like, which are provided by the sequence command operation program 232 and the motion program 234. Therefore, the user program 236, the sequence command operation program 232, and the motion program 234 may also be collectively referred to as a control program 230. In particular, the user program 236 and the motion program 234 which share execution cycles may be regarded as a single control program 230.

Thus, the microprocessor 100 of the CPU unit 13 executes the system program 210 and the control program 230 which are stored in the storage means. In other words, the storage means is used to store at least a system program and a control program. Each program will be described in greater detail hereinafter.

As described above, the user program 236 is produced based on the user's purpose of control (e.g., a line or process to be controlled). The user program 236 is typically in the form of an object program executable by the microprocessor 100 of the CPU unit 13. The user program 236 may be produced in form of a source program written in ladder logic or the like and compiled by the setting device 16, for example. Thereafter, the user program 236 thus produced in the form of an object program is transferred from the setting device 16 via the connection cable 10 to the CPU unit 13, and stored in the first and/or second storage 106, for example.

The scheduler program 212 controls the start of a process and the restart of the process after interruption, in each execution cycle, for the output process program 214, the input process program 216, and the control program 230. More specifically, the scheduler program 212 controls execution of the user program 236 and the motion program 234.

In the CPU unit 13 of this embodiment, an execution cycle (control cycle) having a fixed period which is suited to the motion program 234 is used as a common cycle for all processes. Therefore, it may be difficult to complete all processes during one control cycle. Therefore, the processes are classified into processes which need to be completely executed during each control cycle and processes which are allowed to be executed over a plurality of control cycles, according to, for example, the priority level of the process to be executed. The scheduler program 212 manages, for example, the order of execution of the processes. More specifically, the scheduler program 212 executes a program to which a higher priority level is given, earlier during each control cycle period.

The output process program 214 rearranges output data produced by execution of the user program 236 (the control program 230) into a format which is suitable for transmission to the control device system bus controller 120 and/or the field network controller 140. When the control device system bus controller 120 or the field network controller 140 requires a transmission execution instruction from the microprocessor 100, the output process program 214 issues the instruction. The microprocessor 100 serves as a first and a second processor for the user program and the motion program as described below.

The input process program 216 rearranges input data which has been received by the control device system bus controller 120 and/or the field network controller 140 into a format which is suitable for use in the control program 230.

When a sequence command which is used in the user program 236 is executed, the sequence command operation program 232 is called and executed to accomplish a task requested by the command.

The motion program 234 is executed based on an instruction from the user program 236, and in each execution, calculates one or more command values which is/are output to the motor drivers, such as the servo motor drivers 19 or pulse motor drivers.

Although not shown in detail in Fig. 4, the other system programs 220 may also include programs for achieving functions of the control device 1 other than the individual programs separately shown in Fig. 4. The other system programs 220 may include a program which sets the period of a control cycle, for example.

The real-time OS 200 provides an environment for changing between or switching among a plurality of programs over time. In the control device 1 of this embodiment, an interrupt for starting a control cycle is initially set as an event (interrupt) for outputting (transmitting) output data produced by execution of a program performed by the CPU unit 13 to another unit or device. When an interrupt for starting a control cycle occurs, the real-time OS 200 switches a program executed by the microprocessor 100 from a program which is being executed upon the occurrence of the interrupt to the scheduler program 212. Note that when none of the scheduler program 212 and the programs of which execution is controlled by the scheduler program 212 is being executed, the real-time OS 200 executes a program included in the other system programs 220. Such a program may be, for example, a program which is related to a communication process performed between the CPU unit 13 and the setting device 16 via the connection cable 10 (USB) or the like.

Using the above interrupt, the CPU unit 13 of the control device 1 is configured to control an object of control by repeating transmission of output data, reception of input data, and execution of the control program producing the output data using the input data. In this case, the control device system bus controller 120 and the field network controller 140 (communication circuit) transmit output data and receive input data at intervals equal to the control cycle period.

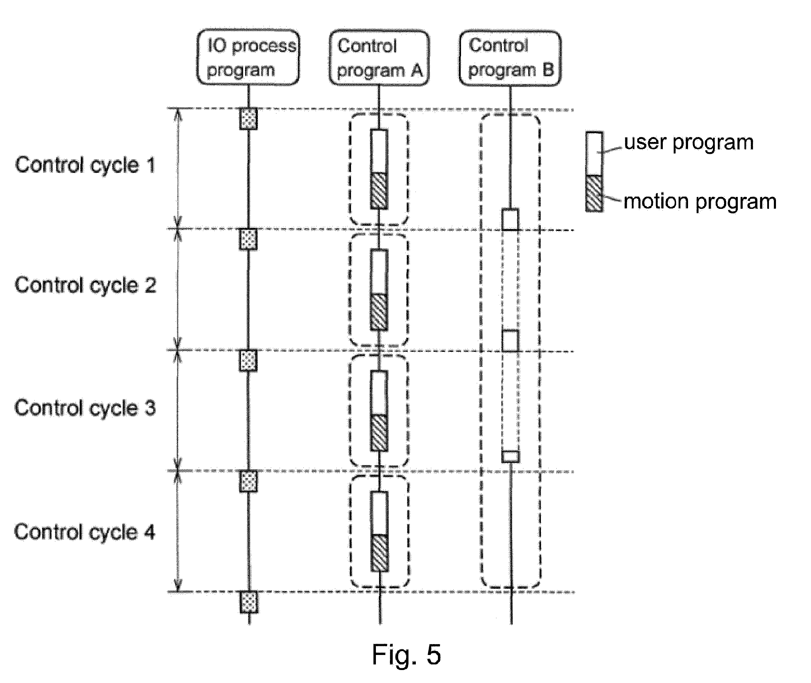

Fig. 5 shows a sequence diagram of an example of a process of a motion control based on a motion program and a user program. On the time axis along which time elapses from the top to the bottom of the paper face, periods during which an IO process program, a control program A and a control program B are executed are shown.

Round-cornered rectangles indicated by the broken line along the time axes of the control programs A and B each indicate the execution cycle of the corresponding control program. In the example shown here, the control program A employs a single control cycle as its execution cycle, whereas the control program B employs four control cycles as its execution cycle. Also, it is assumed that the execution priority of the control program A is set higher than that of the control program B.

The control program A causes a movement of the robot 9 in relation to the conveyor 6. While the control program A is executed, a user program is executed. The user program of the control program A enables one or more motion programs. While the control program B is executed, only another user program is executed. The control program B is related to a slower process such as instructing start, stop and/or speed of the conveyor.

The user program of the control program A is programmed in accordance with the functionality that is to be accomplished by the robot 9. For example, the user program may include a command that causes synchronization between the tool 3 of the robot 9 and a given workpiece 5 on the conveyor. Moreover, the user program may include another command that causes a motion of the tool 3 of the robot 9 relative to the workpiece 5 moving on the conveyor. To generate such a superimposed motion, the user program provides offset values, e.g. by reading in such offset values from a storage or the like. The above-mentioned commands may be realized by enabling one or more motion programs that are executed during each control cycle.

When a control cycle 1 is started, the IO process program is executed due to execution control performed by the scheduler program 212. When the output process and the input process due to execution of the IO process program have finished, the control program A is executed due to execution control performed by the scheduler program 212. When executing the control program A, the user program is first executed, and then the motion program 234 is executed. The sequence command operation program 232 is executed every time it is called during execution of the user program. The entire control program A (the user program and the motion program) is configured as a single thread, and is executed continuously without involvement of the scheduler program 212 during execution.

When the execution of the control program A is ended, the control program B is executed due to execution control performed by the scheduler program 212. However, since the control cycle 1 ends (a control cycle 2 starts) while the control program B is being executed, execution of the control program B is interrupted at that time.

Also from the control cycle 2 onward, execution of the IO process program and the control program A is repeated in the same manner as in the control cycle 1. When execution of the control program A in the control cycle 2 ends, the unexecuted portion of the control program B is executed. However, the control cycle 2 also ends while the control program B is being executed, and thus execution of the control program B is again interrupted.

Execution of the control program B whose execution has been recommenced in a control cycle 3 ends before the end of the control cycle 3. Although the execution cycle of the control program B that has started in the control cycle 1 has not yet ended in a control cycle 4, since execution of the control program B in that execution cycle has already ended in the control cycle 3, the control program B is not executed in the control cycle 4.

Fig. 6 shows a data flow of motion command values for controlling a motion of a machine. A synchronization functionality 23 generates synchronization motion command values X, Y, Z for the position of the center point of the tool unit and synchronization motion command values J4, J5, J6 for the rotation of the tool unit. The synchronization motion command values synchronize the position of the tool unit with the movement of the conveyor.

The synchronization motion command values are combined 25, 28 with an offset value from an offset functionality 24, 27 in order to generate motion command values (position data). The offset J4, J5, J6 provided by the offset functionality 27 correspond to the three wrist angles mentioned relating to Fig. 1. The position data X, Y, Z in Cartesian coordinates are passed through an inverse kinematics unit 26 for converting the position data into motor axis rotation position data R1, R2, R3.

Using the offset values, the superimposed movement of the tool unit in relation to the object can be performed.

The position command values R1, R2, R3 and R4, R5, R6 (corresponding to J4, J5, J6) are provided to the servo drivers 19 in order to control the motors 18. Encoders 29 are used to provide a feedback signal from the motors 18 to the servo drivers 19.

The offset values, also referred to as "offset", may be prepared as a profile in the form of a numerical table of coordinates. A set of values consisting of values of X, Y, Z, J4, J5, J6 sequentially selected from the profile may be provided in every control cycle during the offset movement. The offset values may be read in from the profile, or alternatively may be generated on the fly when executing the user program. In an alternative embodiment, it is also possible to provide only a subset of the values X, Y, Z, J4, J5, J6 as the offset values. For example, if the wrist angle of the tool is constant relative to the workpiece, then it is sufficient to provide only the offset values X, Y and Z. Similarly, if the movement of the tool relative to the workpiece is limited to the X-Y plane, then it is sufficient to provide only the offset values X and Y.

There are several ways to generate a profile of offset values. For example, a profile may be generated by using a teaching tool (not shown) and operating the machine in a teaching mode. In the teaching mode, in a stationary state (i.e. while the conveyor is not moving) the tool of the machine is manually guided through the movement that is to be superimposed over the synchronized movement. The teaching tool then records the tool coordinates at certain points in time for all relevant degrees of freedom and generates the profile from the recorded tool coordinates. Needless to say, the profile may also be generated by any other suitable method, e.g. by setting the profile manually or generating it with the help of a simulation program or the like. The generated profile is then stored in a suitable storage or data carrier, and may be either accessed by or incorporated into the user program.

In a further embodiment, the vision sensor 4 in Fig. 1 or a laser scanning sensor may generate the offset values. For example, the vision sensor 4 detects the position and shape of the workpiece 5 when the workpiece 5 comes in the field of the camera, and offset values are generated which indicate distances from a reference point of the workpiece 5 and express a trajectory on or over the workpiece 5, and sends the offset values to the control device 1. In this case, it is possible to take into account different shapes or sizes of the workpiece 5, or different positions or orientations of the workpiece 5 on the conveyor.

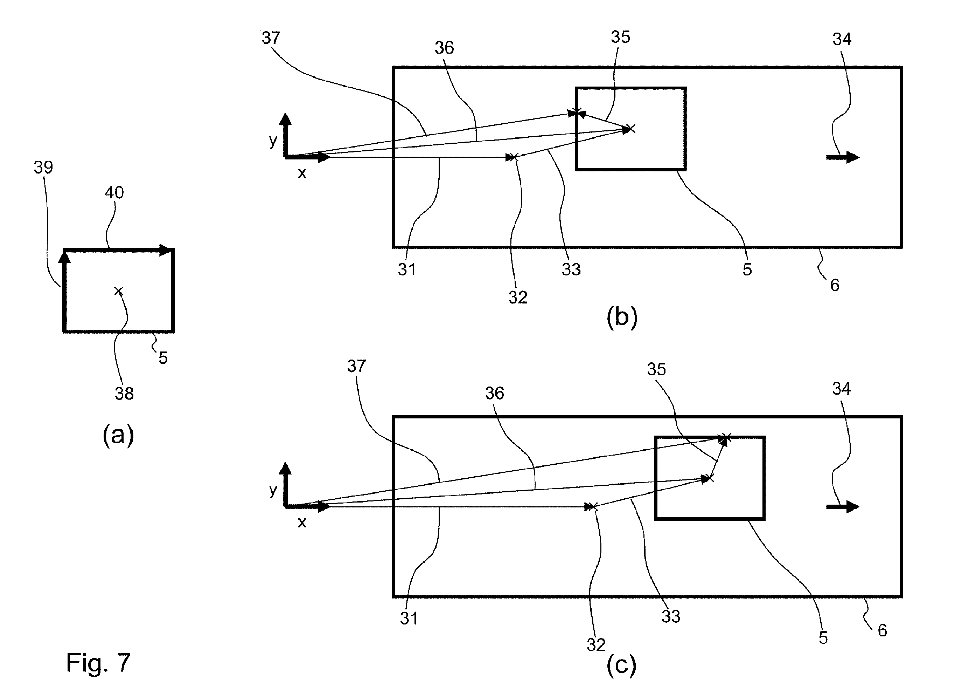

An example of a motion of a robot 9 can be seen in Fig. 7, where a workpiece 5 is located on a conveyor 6 which is moving in direction 34. Two sides of the rectangular workpiece 5 are to be provided with an adhesive by robot movements 39, 40 (Fig. 7(a)).

In Fig. 7(b), the movement 39 is carried out and in Fig. 7(c), the movement 40 is carried out. For these movements, a workpiece reference point 38 and a belt reference point 32 are determined. The current command position 37, also referred to as "motion command value", is determined based on a current workpiece position 36 and an offset value 35. The current workpiece position 36 is determined based on a current belt position 31, also referred to as "conveying position", and a relative workpiece position 33, also referred to as "synchronization motion command value". It should be noted that "x" and "y" in Fig. 7(b) and 7(c) indicate the origin of the coordinate system in which e.g. the belt reference point 32 and the current workpiece position 36 are given.

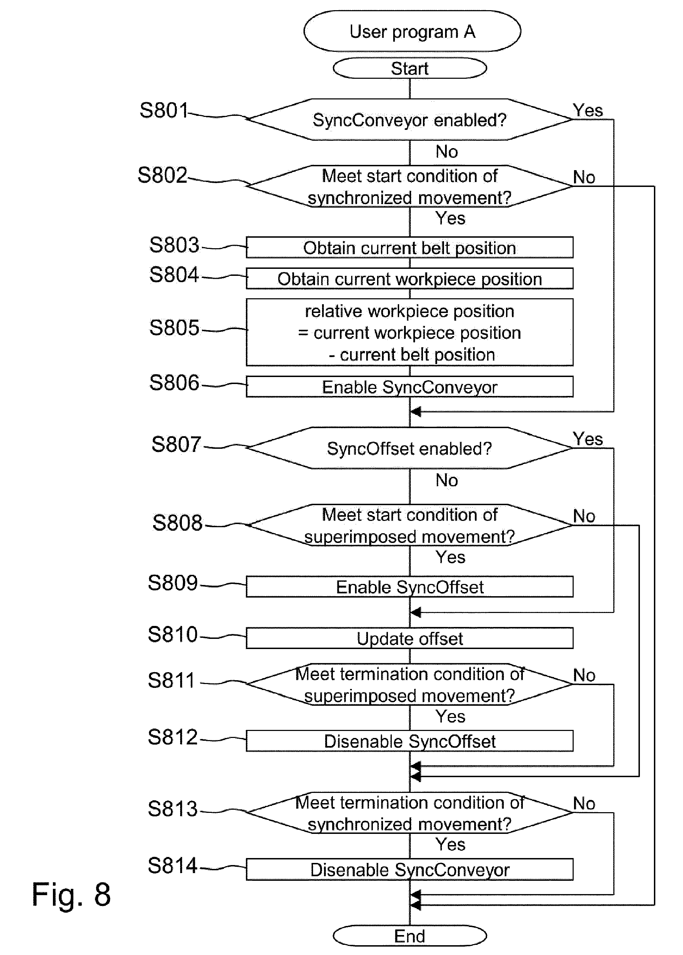

Fig. 8 shows a flowchart of the user program A. The user program A is executed repeatedly in accordance with its own execution cycle that may be the control cycle or a longer cycle. This user program A enables two motion programs, namely a synchronization motion program (SyncConveyor) for synchronizing the robot 9 with the conveyor 6 and a synchronization offset motion program (SyncOffset) for performing a superimposed movement. In other words, the user program A, while being executed repeatedly, first causes synchronization of the tool of the machine with the workpiece, and then causes a superimposed movement of the (synchronized) tool relative to the workpiece.

In step S801, it is determined whether the synchronization motion program (SyncConveyor) is enabled, i.e. activated or launched by the user program. If the synchronization motion program (SyncConveyor) is enabled (yes in S801), then the program continues with step S807.

If the synchronization motion program (SyncConveyor) is not enabled (no in S801), it is determined whether a start condition of the synchronization movement is met (S802). If the start condition is not met, the program is ended.

If the start condition is met (yes in S802), the current belt position 31 is obtained (S803). Then, the current workpiece 36 position is obtained (S804). The relative workpiece position 33 is determined by subtracting the current belt position 31 from the current workpiece position 36 (S805), and then SyncOffset is enabled (S806). Then the program advances to step S807.

If the synchronization offset motion program (SyncOffset) is enabled (yes in S807), the program jumps to S810. If the synchronization offset motion program (SyncOffset) is not enabled (no in S807), it is determined whether a start condition of the superimposed movement, i.e. the movement in relation to the workpiece, is met (S808). If this start condition is not met (no in S808), the program jumps to S813. If the start condition is met (yes in S808), the synchronization offset motion program is enabled (S809) and the offset is updated (S810). Then the program advances to step S811.

If the termination condition of the superimposed movement is met (S811), the synchronization offset motion program is disenabled (S812). If this termination condition is not met (no in S811), the program jumps to step S813, where it is determined whether the termination condition of the synchronization movement is met.

If the termination condition of the synchronization movement is not met (no in S813), the program is ended. If the termination condition of the synchronization movement is met (yes in S813), SyncConveyor is disenabled (S814).

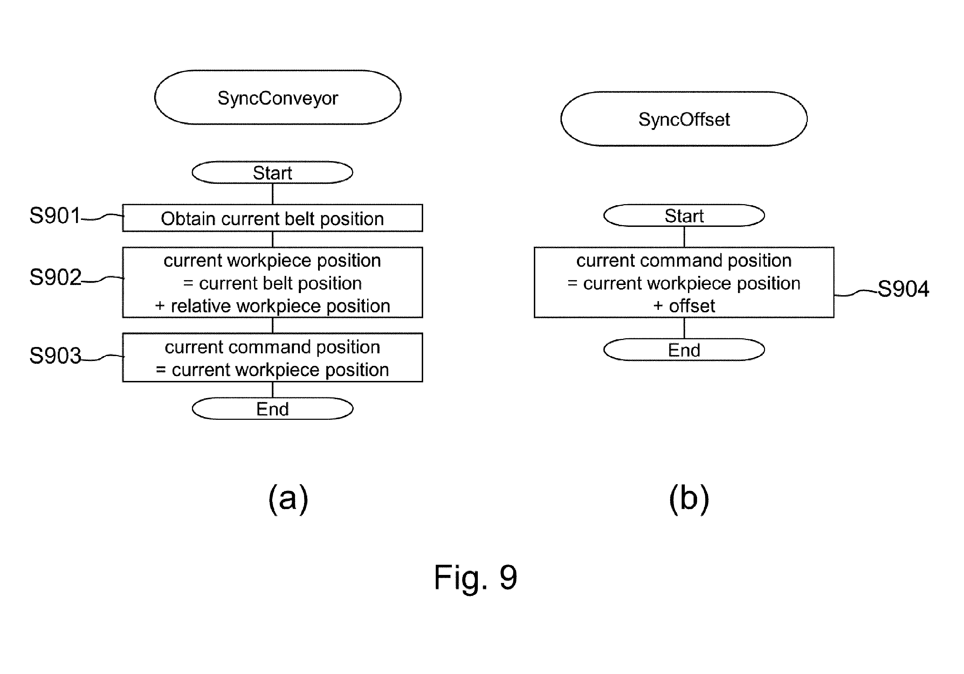

Fig. 9 (a) illustrates a detailed flowchart of SyncConveyor and Fig. 9 (b) illustrates a detailed flowchart of SyncOffset.

Once enabled, the SyncConveyor program is executed in every control cycle until the synchronization movement is terminated and the SyncConveyor program is disabled. After obtaining the current belt position 31 (S901), the current workpiece position 36 is determined as the current belt position 31 plus the relative workpiece position 33 (S902). Then, the current command position, i.e. the synchronization motion command value, is defined as the current workpiece position 36 (S903).

Once enabled, the SyncOffset program is executed after the execution of the SyncConveyor program in every control cycle until the superimposed movement is terminated and the SyncOffset program is disabled. Here, the current command position is defined as the current workpiece position 36 plus the offset 35 (S904). Thus, the offset motion command value 37 is calculated by the current workpiece position 36, i.e. the synchronization motion command value 36, plus the offset value 35.

The functionality of the motion programs in this example can be summarized as follows: The motion program SyncConveyor determines a synchronization motion command value 36 for operating the robot 9 in synchronization with the conveying position. If the motion program SyncOffset is not enabled, the synchronization motion command value 36 is used as a motion command value for operating the robot 9. In other words, in this situation, no superimposed movement is added to the synchronized movement, and the robot 9 (or the tool 3 thereof) moves in synchronization with the workpiece 5, and does not move relative to the workpiece 5. On the other hand, if the motion program SyncOffset is enabled, then the motion program SyncOffset determines an offset motion command value which is the motion command value 37. In this case, a superimposed movement is added to the synchronized movement, and the robot 9 (or the tool 3 thereof) performs a movement relative to the workpiece 5. The motion program SyncOffset calculates this offset motion command value 37 by adding the offset value 35 to the synchronization motion command value 36.

It should be noted that in the above-described motion program SyncConveyor, the current workpiece position 36 is calculated by adding the relative workpiece position 33 to the current belt position 31 (S902), and the current command position is then set to the current workpiece position (S903). This is suitable in a state in which the tool 3 is synchronized with the workpiece. However, before synchronization, the tool 3 may be at a position at a considerable distance from the workpiece 5. In this state, it may not be possible to move the tool 3 in a single control cycle from its current position to the target position (namely the initial position of the offset movement). Rather, the movement of the robot 9 is controlled such that the tool 3 gradually approaches the target position. During this gradual approach, the SyncConveyor program calculates command positions for every control cycle so as to gradually decrease the distance between the current command position and the target position.

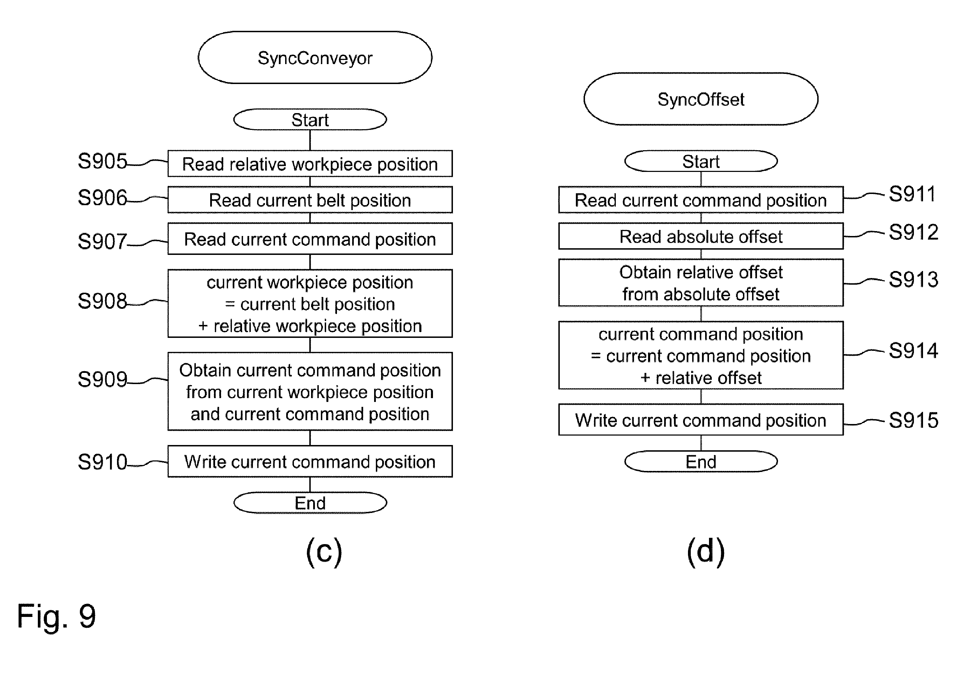

This aspect has been ignored in the flowcharts of SyncConveyor and SyncOffset shown in Figs. 9 (a) and 9 (b) above. Figs. 9 (c) and 9 (d) show variants of SyncConveyor and SyncOffset, in which this gradual approach is taken into account.

First, it should be noted that in the example shown in Figs. 9 (a) and 9 (b), the variables for the "current belt position 31", "relative workpiece position 33" and so on can be accessed commonly from the user program and the motion programs (such as SyncConveyor and SyncOffset), i.e. that those variables are implemented as global variables. By contrast, in the flowcharts of Figs. 9 (c) and 9 (d), it is assumed that the values stored in global (or common) variables are copied to local variables of the motion programs. This copying process is expressed as "read" in the flowcharts of Figs. 9 (c) and 9 (d). For example, "read current belt position" means that the value stored in a global variable representing the current belt position is copied to a local variable representing the current belt position. Furthermore, the values calculated by the motion programs are copied from local variables of the motion programs to corresponding global (or common) variables. For example, "write current command position" means that the value stored in a local variable representing the current command position is copied to a global (or common) variable representing the current command position. These copy processes may be automatically executed by the system program of the control device, so that the motion programs do not necessarily need to execute the copy processes.

The control device 1 may have actual axis variables and command axis variables as global (or common) variables. More specifically, one actual axis variable and one command axis variable may be given for each motor axis. The actual axis variable represents the actual position of the corresponding motor axis.

The actual axis variable stores a value that is input from the encoder of the corresponding motor and that is updated in real-time, for example in every control cycle or in every input cycle.

The command axis variable represents the current command value (corresponding to the target position or setpoint) for the corresponding motor axis. The command axis variable is updated when the motion program outputs a new command value for the motor. Note that the values of X, Y, Z, J4, J5, J6 and R1, R2, R3, R4, R5 and R6 in Fig. 6 are stored in command axis variables. It is also possible to store the command axis variables of these values in form of an array.

The following is a more detailed explanation of the flowchart of SyncConveyor according to Fig. 9 (c).

After starting the program SyncConveyor, the relative workpiece position 33 is read in step S905, the current belt position 31 is read in step S906, and the current command position 37 is read in step S907. Needless to say, the order of the steps S905, S906 and S907 is not limited to the given order, and any order is suitable. Note further that "current belt position" is an actual axis variable, whereas "current command position" is a command axis variable.

In step S908, the current workpiece position 36 is calculated by adding the current belt position 31 to the relative workpiece position 33.

In step S909, the (updated) current command position 37 is obtained based on the current workpiece position 36 and the (present) current command position 37. By taking into account the present current command position 37, it is possible to achieve a homing motion, in which the tool 3 homes in to the position of the workpiece 5.

In step S910, the current command position is written, i.e. the value stored in a local variable representing the current command position 37 is copied to a global (or common) variable representing the current command position. Then the motion program SyncConveyor ends.

It should further be noted that in Figs. 9 (a) and (b), the current workpiece position 36 is used to transmit the calculation result of SyncConveyor to SyncOffset. By contrast, in the variants of SyncConveyor and SyncOffset according to Figs. 9 (c) and (d), the current command position is transmitted from SyncConveyor to SyncOffset through a command axis variable. Accordingly, since the current command position is used in Fig. 9 (d) instead of the current workpiece position as in Fig. 9 (b), a relative offset needs to be considered in SyncOffset according to Fig. 9 (d). Here, the offset value 35 shown in Fig. 7 (b) refers to the absolute offset. The relative offset is the difference between the absolute offset of the current control cycle and the absolute offset of the immediately previous control cycle. Accordingly, the value of the relative offset can be determined from the values of the (current and immediately previous) absolute offsets.

The following is a more detailed explanation of the flowchart of SyncOffset according to Fig. 9 (d).

After starting the program SyncConveyor, the current command position 37 is read in step S911 and the absolute offset is read in step S912. Needless to say, the order of the steps S911 and S912 is not limited to the given order.

In step S913, the relative offset is calculated from the (current and immediately previous) absolute offsets as described above. It should be noted that it is also possible that the relative offset is calculated by the user program and read in by SyncOffset from the user program.

Then, in step S914, the current command position is calculated by adding the relative offset calculated in step S913 to the current command position read in step S911.

Finally, in step S915, the current command position is written, i.e. the value stored in a local variable representing the current command position 37 is copied to a global (or common) variable representing the current command position. Then the motion program SyncOffset ends.

It should be noted that the calculation of adding the relative offset to the current command position is an example of adding the offset value provided by the execution of the user program to the synchronization motion command value.

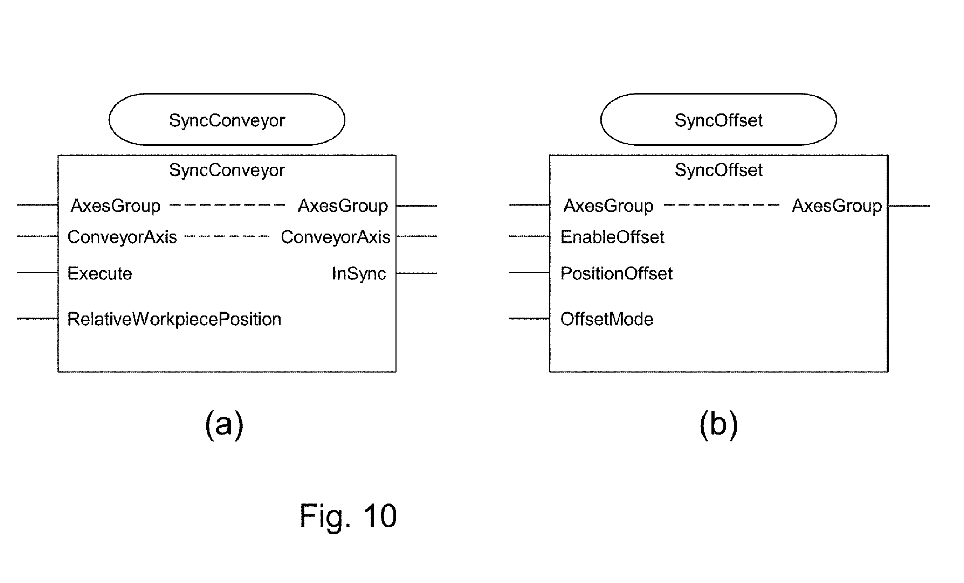

Fig. 10 shows a ladder program representation of the synchronization motion program SyncConveyor (Fig. 10(a)) and the synchronization offset motion program SyncOffset (Fig. 10(b)) of Fig. 9.

Terminals on the left side of the programs represent inputs and terminals on the right side represent outputs.

In Fig. 10(a), the terminals "AxesGroup", "ConveyorAxis", "Execute", and "RelativeWorkpiecePosition" are provided as inputs. The variable assigned to the input terminal AxesGroup is a command axis variable. More specifically, it is an array variable, which represents the command positions for all axes, corresponding to X, Y, Z, J4, J5, J6 in Fig. 7, for example. To the input terminal "ConveyorAxis" a variable expressing the current position of the conveyor may be assigned. The variable assigned to "ConveyorAxis" is an actual axis variable.

Further, to the input terminal "Execute" a variable may be assigned which causes the SyncConveyor program to execute. SyncConveyor is executed when the value of "Execute" changes from 0 to 1. Furthermore, to the input terminal "RelativeWorkpiecePosition" a variable corresponding to the relative workpiece position 33 in Fig. 7, 8 and 9 may be assigned.

Values of "AxesGroup" as well as "ConveyorAxis" may be output. In addition, a value may be output at the output terminal "InSync" wherein a value of 1 is output when movements of axes designated by "AxesGroup" are synchronized to the movement of the workpiece on the conveyor.

In Fig. 10(b), a variable may be assigned to the input terminal "AxesGroup" as described above. Further, a variable may be assigned to the input terminal "EnableOffset" representing a variable to enable the SyncOffset program. SyncOffset is enabled when the value changes from 0 to 1.

Further, a variable may be assigned to the input terminal "PositionOffset" representing an array type variable containing a set of offset values. Furthermore, a variable may be assigned to the input terminal "OffsetMode" representing a variable expressing whether the offset values are absolute values or differential values from the values of the previous control cycle.

The only output terminal in Fig. 10(b) is the output terminal "AxesGroup" as described above with reference to Fig. 10(a).

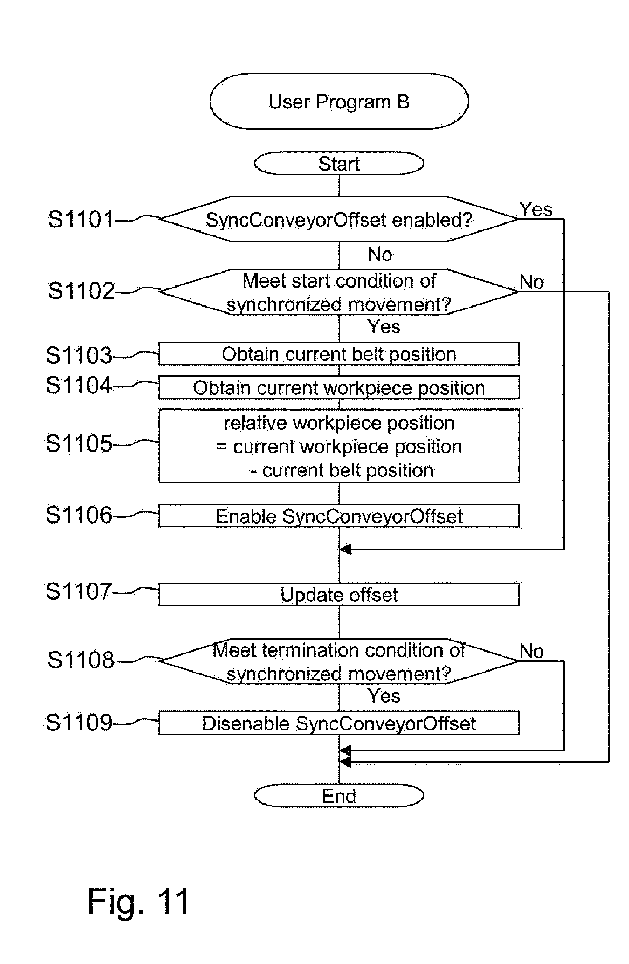

Fig. 11 shows a flowchart of an alternative user program of Fig. 8.

The processing of the steps S1102, S1103, S1104, S1105, S1107 and S1108 of the user program B is the same as the processing of the steps S802, S803, S804, S805, S810 and S813 of user program A shown in Fig. 8, and is therefore not further explained. However, instead of determining whether the synchronization motion program A (SyncConveyor) is enabled, it is determined whether the synchronization offset motion program B (SyncConveyorOffset) is enabled (S1101). Also in steps S1106 and S1109, SyncConveyorOffset is enabled and disenabled, respectively.

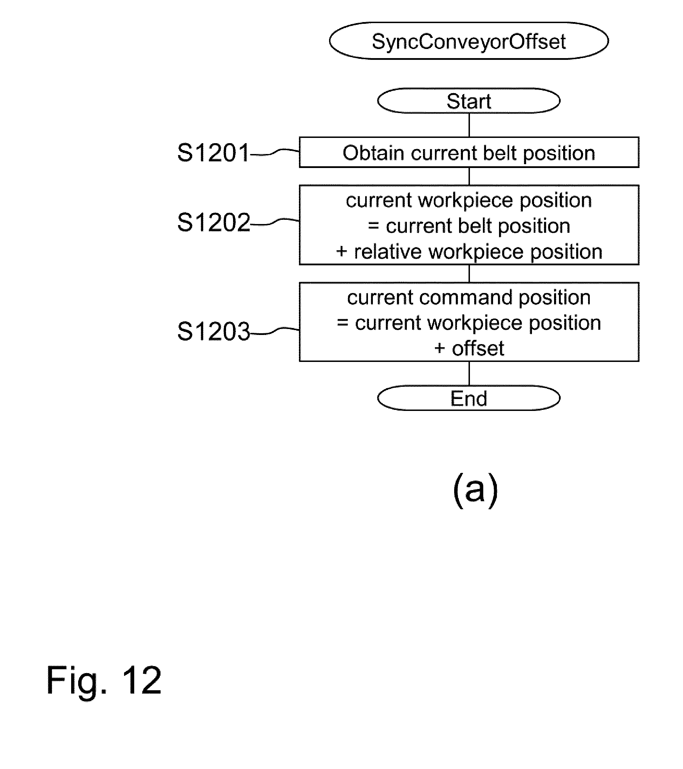

In the user program B, SyncConveyorOffset provides the functionality of a synchronization offset motion program. Fig. 12 (a) illustrates a flowchart of SyncConveyorOffset. The steps S1201, S1202, and S1203 of SyncConveyorOffset respectively correspond to the steps S803, S902, and S903 of the flowcharts of SyncConveyor in Fig. 9 (a) and SyncOffset in Fig. 9(b), and are therefore not explained in more detail.

Once enabled, the SyncConveyorOffset program is executed in every control cycle until the synchronization movement is terminated.

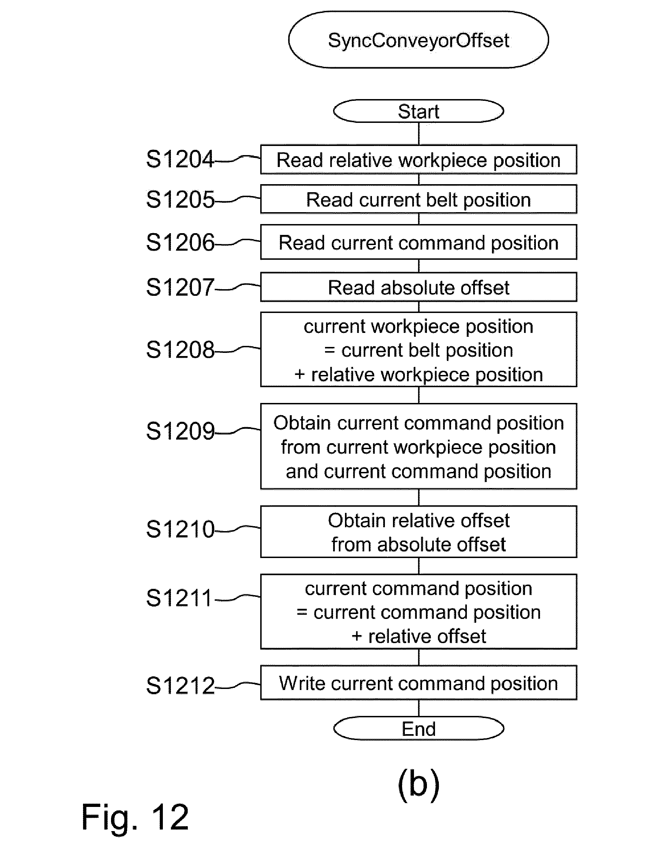

Fig. 12 (b) shows a flowchart of a variant of SyncConveyorOffset. The flowchart in Fig. 12 (b) corresponds to the flowcharts in Figs. 9 (c) and (d), in which the gradual approach of the tool 3 to the workpiece 5 during the process of synchronization is taken into account.

In steps S1204, S1205, S1206 and S1207, the relative workpiece position, the current belt position, the current command position and the absolute offset are read in (these steps correspond to steps S905, S906, S907 of the flowchart in Fig. 9 (c) and step S912 of the flowchart in Fig. 9 (d).

In step S1208, the current workpiece position is calculated by adding the current belt position to the relative workpiece position, as in step S908 of Fig. 9 (c).

In step S1209, the current command position is obtained from the current workpiece position and the current command position, in the same manner as in step S909 of Fig. 9 (c).

In step S1210, the relative offset is obtained from the (current and immediately previous) absolute offsets in the same manner as in step S913 of Fig. 9 (d).

Then, in step S1211, the current command position is calculated by adding the relative offset calculated in step S1210 to the current command position read in in step S1206, as in step S914 of Fig. 9(d).

Finally, in step S1212, the current command position is written in the same manner as in steps S910 or S915. Then the motion program SyncConveyorOffset ends.

One advantage of the user program B is that only one motion program (namely SyncConveyorOffset) needs to be provided, whereas in the case of the user program A, two motion programs (namely SyncConveyor and SyncOffset) need to be provided. Accordingly, the user program B requires less programming by the user.

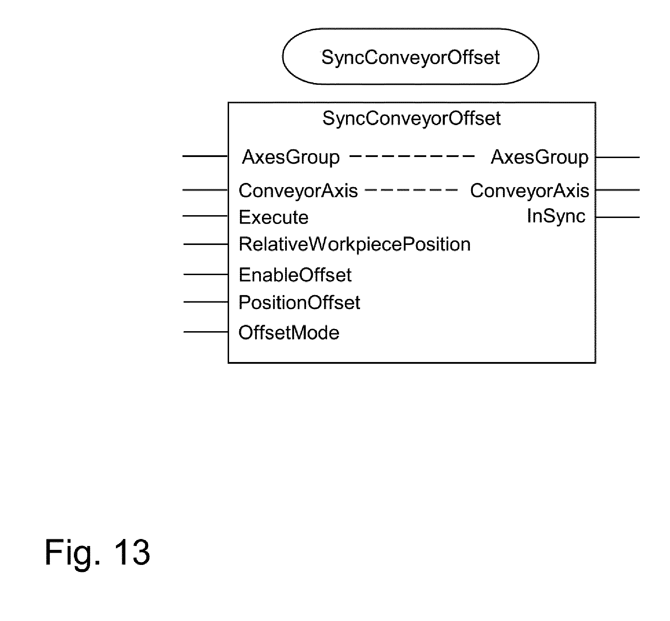

Fig. 13 shows a ladder program representation of the synchronization motion program (Fig. 12 (a)) of Fig. 8.

Terminals on the left side of the programs represent inputs and terminals on the right side represent outputs.

In Fig. 13, to the input terminal "AxesGroup" a variable expressing an axes group consisting of, in case of Fig. 7 for example, axes corresponding to X, Y, Z, J4, J5, J6 may be assigned. This is also described with reference to Fig. 10(a). In addition, to the input terminal "ConveyorAxis" a variable expressing a current position of the conveyor axis may be assigned.

Further, to the input terminal "Execute" a variable to execute the SyncConveyorOffset program may be assigned. SyncConveyorOffset is executed when the value at the input terminal "Execute" changes from 0 to 1. Furthermore, to the input terminal "RelativeWorkpiecePosition" a variable corresponding to the relative workpiece position 33 in Fig. 7, 8 and 9 may be assigned.

Values may be output at the output terminals "AxesGroup" as well as "ConveyorAxis". In addition, a value may be output at the output terminal "InSync" wherein a value of 1 is output when movements of axes designated at "AxesGroup" are synchronized to the movement of the conveyor.

Further, a variable may be assigned at the input terminal "EnableOffset" representing a variable to enable the SyncOffset program. SyncOffset is enabled when the value changes from 0 to 1.

Further, a variable may be assigned at the input terminal "PositionOffset" representing an array type variable containing a set of offset values. Furthermore, a variable may be assigned to the input terminal "OffsetMode" representing a variable expressing whether the offset values are absolute values or differential values from the values of the previous control cycle.

Needless to say, the implementation of the motion programs is not limited to the above-described embodiments. For example, in the above-described embodiments, the relative workpiece position is calculated at the moment when the workpiece is detected, and stored as the variable RelativeWorkpiecePosition which expresses the displacement of the workpiece from the reference belt point at that time. This value is read in (S905 in Fig. 9 (c) and by adding the current belt position, it is then possible to calculate the current workpiece position (S908 in Fig. 9 (c)). Alternatively, it is also possible to let SyncConveyor read in an initial workpiece position and the current belt position. The belt displacement can then be calculated from the current belt position, and the workpiece position can be calculated from the initial workpiece position and the belt displacement.

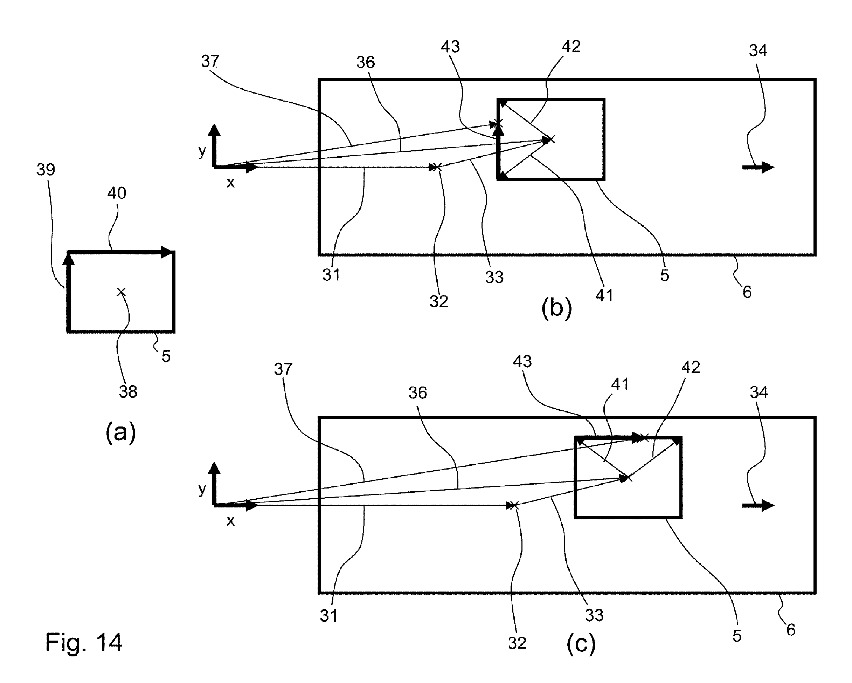

Fig. 14 shows an example of a motion of a robot 9 according to a comparative system (internally known to the applicant but not published), where a workpiece 5 is located on a conveyor 6 which is moving in direction 34. Two sides of the rectangular workpiece 5 are to be provided with an adhesive by robot movements 39, 40 (Fig. 14(a)). Movement 39 corresponds to a superimposed movement A and movement 40 corresponds to a superimposed movement B. Elements which are identical to the motion example of Fig. 7 are indicated using the same reference signs.

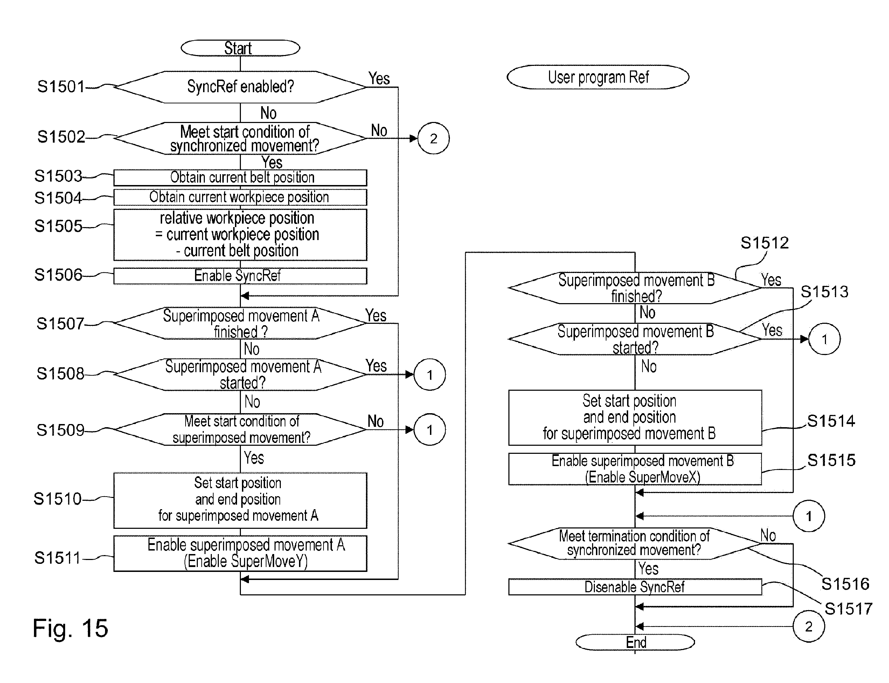

In Fig. 14(b), the movement 39 is carried out and in Fig. 14(c), the movement 40 is carried out. For these movements, a workpiece reference point 38 and a belt reference point 32 are determined. The current command position 37 is determined based on a current workpiece position 36, start position 41 and a current displacement 43. The current workpiece position 36 is determined based on a current belt position 31, also referred to as "conveying position", and a relative workpiece position 33. In addition to the motion example of Fig. 7, a start position 41 and an end position 42 are determined which will be explained with reference to Fig. 15.

Fig. 15 shows a flowchart of the user program Ref used in Fig. 14.

In step S1501, it is determined whether the synchronization reference program (SyncRef) is enabled (i.e. activated). If the synchronization reference program (SyncRef) is enabled (yes in S1501), the program jumps to step S1507.

If the synchronization reference program (SyncRef) is not enabled (no in S1501), it is determined whether a start condition of the synchronization movement is met (S1502). If this start condition is not met, the program is ended.

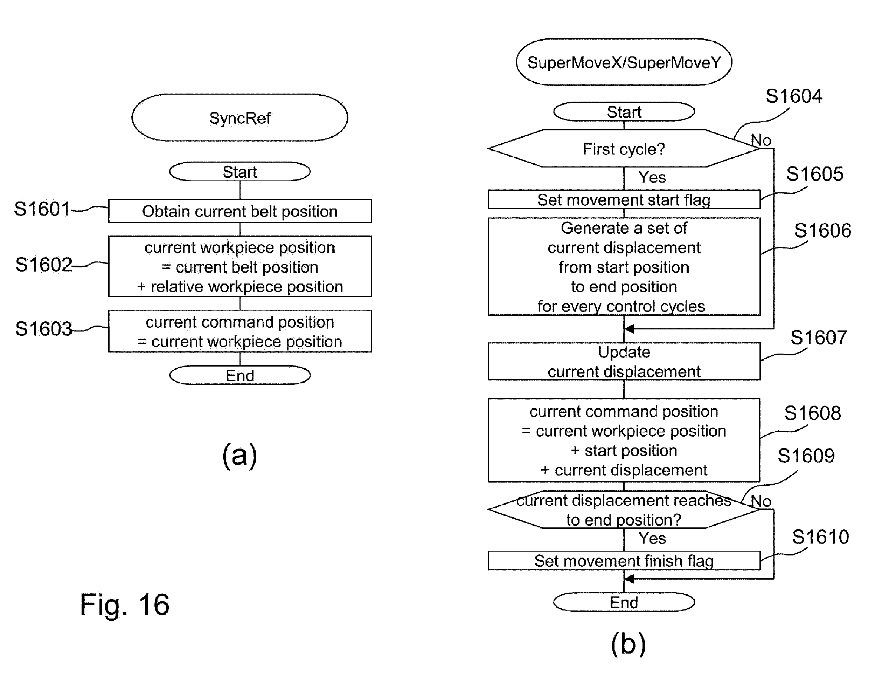

If this start condition is met, the current belt position 31 is obtained (S1503). Then, the current workpiece position 36 is obtained (S1504). The relative workpiece position 33 is determined by subtracting the current belt position 31 from the current workpiece position 36 (S1505) and SyncRef is enabled (S1506), which is shown in Fig. 16(a). Then the program advances to Step S1507.

If the superimposed movement A is finished (yes in S1507), the program jumps to S1512. If the superimposed movement A is not finished (no in S1507), it is determined whether the superimposed movement A has started (S1508). If the superimposed movement A has started (yes in S1508), the program jumps to S1516. If the superimposed movement A has not started (no in S1508), it is determined whether the start condition of the superimposed movement A is met (S1509).

If this start condition is not met (no in S1509), the program jumps to S1516. If this start condition is met (yes in S1509), the start position 41 and the end position 42 of the superimposed movement A are set (S1510). Subsequently, the superimposed movement A is enabled, i.e. SuperMoveY is enabled which is shown in Fig. 16 (b), (S1511). Then the program advances to Step S1512.

If the superimposed movement B is finished (S1512), the program jumps to S1516. If the superimposed movement B is not finished (no in S1512), it is determined whether the superimposed movement B has started (S1513). If the superimposed movement B has started (yes in S1513), the program jumps to S1516. If the superimposed movement B has not started (no in S1513), the start position 41 and the end position 42 of the superimposed movement B are set (S1514). Subsequently, the superimposed movement B is enabled, i.e. SuperMoveX is enabled which is shown in Fig. 16 (b), (S1515). Then the program advances to Step S1516.

If the termination condition of the synchronized movement is met (S1516), SyncRef is disenabled (S1517).

Fig. 16 (a) illustrates a detailed flowchart of SyncRef and Fig. 16 (b) illustrates a detailed flowchart of SuperMoveX and SuperMoveY.

Once launched, the SyncRef program is executed in every control cycle until the synchronized movement is terminated. After obtaining the current belt position 31 (S1601), the current workpiece position 36 is determined as the current belt position 31 plus the relative workpiece position 33 (S1602). Then, the current command position is defined as the current workpiece position 36 (S1603).

Once launched, the SuperMoveY program or the SuperMoveX program is executed in every control cycle until the superimposed movement by itself is finished. In the SuperMoveY and the SuperMoveX program, it is first determined whether this is the first cycle (S1604).

If it is indeed the first cycle (yes in S1604), a movement start flag is set (S1605). Then, a set of current displacement values 43 is generated from a start position 41 to an end position 42 for every control cycle (S1606). Thus, in contrast to the above-described control device 1, displacement values 43 are set at the beginning for a linear movement from a start position 41 to an end position 42 and cannot be changed during the execution of the motion program.

If it is not the first cycle (no in S1604), the program continues directly at step S1607 with updating the current displacement 43.

Then, the current command position 37 is defined as the current workpiece position 36 plus the start position 41 plus the current displacement 43 (S1608). Then, it is determined whether the current displacement 43 reaches the end position 42 (S1609). If yes, a movement finish flag is set (S1610). If not, the program directly ends.

Comparing the user program of this comparative embodiment shown in Fig. 15 with the respective user programs of the embodiments of the present invention as illustrated in Figs. 8 and 11, some further examples of the invention should become clear. Namely, in the comparative embodiment, it is necessary to provide a separate command or series of commands for each linear movement (see series of steps S1507 to S1511 and steps S1512 to S1515, which are provided respectively for a single linear movement). Thus, generally speaking, with the comparative embodiment, it is necessary to program N separate commands or series of commands, in order to implement a superimposed motion consisting of N linear segments. In a programming environment based on ladder logic, this means that a separate ladder block has to be provided for each of these N segments. Accordingly, it is quite cumbersome to implement a complex superimposed movement with the comparative embodiment.

By comparison, with the embodiments according to the invention, it is possible to trigger a complex superimposed movement with a single command, such as SyncOffset or SyncConveyorOffset described above. Accordingly, in particular in a programming environment based on ladder logic, the programming of complex superimposed movements is simplified drastically.

A further difference between the comparative embodiment and the embodiments of the present invention is that in the comparative embodiments, all offset values are already predetermined at the time the user program is written. While the offset values may not be calculated and stored in a storage at that point, the relevant parameters are determined by the programmer at the time of programming. Thus, it is difficult to provide variability. For example, in order to provide two variations of superimposed movements in a programming environment based on ladder logic, it is necessary to provide both of these variations in ladder logic and provide them as separate branches of a decision tree.

By contrast, in the embodiments according to the invention, the offset values are provided by the user program. Here, "provided by the user program" may mean that the user program reads in the offset values from a table (or database or the like) associated with the user program. But it may also mean that the user program obtains the offset values in other ways.

For example, in one possible variation, the offset values may be adapted in accordance with a given sensor input. One possible example of this variation might be to adapt the offset values to the size of a cake as a workpiece 5 to be decorated. For example, a sensor such as the vision sensor 4 in Fig. 1 or a laser scanning sensor might be provided that measures the size of a cake. In accordance with the measured diameter of the cake, the offset values may be adapted, e.g. by multiplying them with a corresponding constant. Alternatively, the vision sensor 4 or the laser scanning sensor, or a computing device associated with them, may generate a sequence of offset values.

In a further variation, the offset values may be input in real-time from outside. For example, an operating device such as the HMI device 7 in Fig. 1 may be connected to the control device 1, which can be operated by a user in order to control the motion of the tool of the machine. An example for such an operating device may be a joystick or similar device, but there is no limitation to this. In accordance with the user's operation, offset values are generated in real-time, which are then sent to the control device 1, where they can be accessed by the user program and provided to the synchronization offset motion program or the like. Accordingly, it is possible to achieve a superimposed movement of the tool of the machine relative to the moving workpiece in real-time.

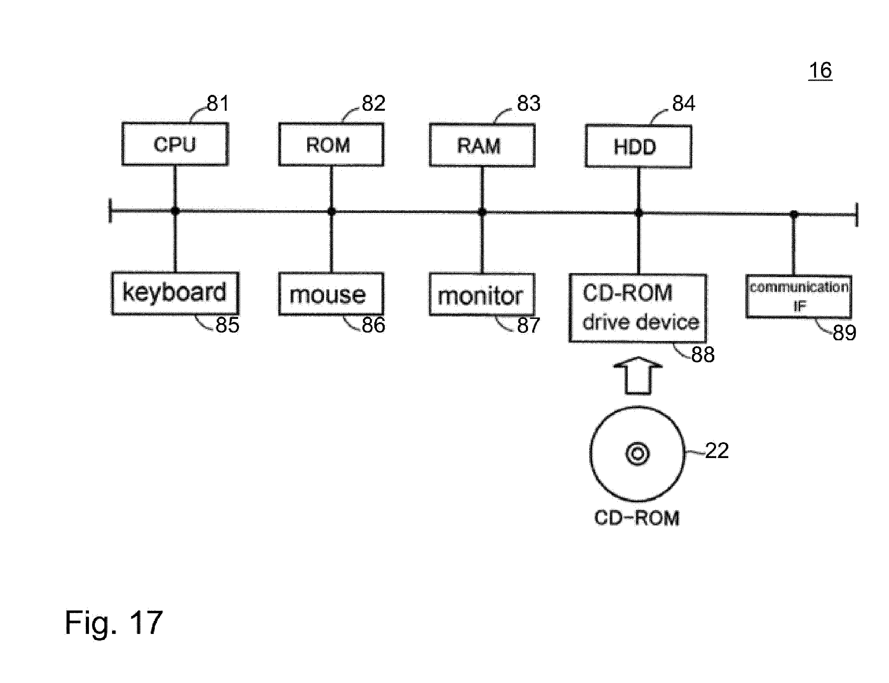

Fig. 17 illustrates a hardware configuration of the setting device 16. The setting device 16 can be used for providing a program to be executed by the control device 1. The program can comprise a user program as described in Figs. 8 and 11.

The setting device 16 includes a CPU 81 which executes various programs including an OS, a ROM (Read Only Memory) 82 which stores a BIOS and various kinds of data, a memory RAM 83 which provides a working area for storing data required for execution of a program in the CPU 81, and a hard disk (HDD) 84 which stores the program executed by the CPU 81 in a non-volatile manner.

The setting device 16 further includes a keyboard 85 and a mouse 86 which receive the user's operation, and a monitor 87 which presents information to the user. The setting device 16 further includes a communication interface (IF) 89 for communicating with the control device 1 (the CPU unit 13), etc.

As described below, various programs, e.g. the setting program 92, executed by the setting device 16 may be distributed on a CD-ROM 22. The program stored on the CD-ROM 22 is read by a CD-ROM (Compact Disk-Read Only Memory) drive 88, and stored into the hard disk (HDD) 84, etc. Alternatively, the program may be downloaded from a host computer at a higher level via a network.

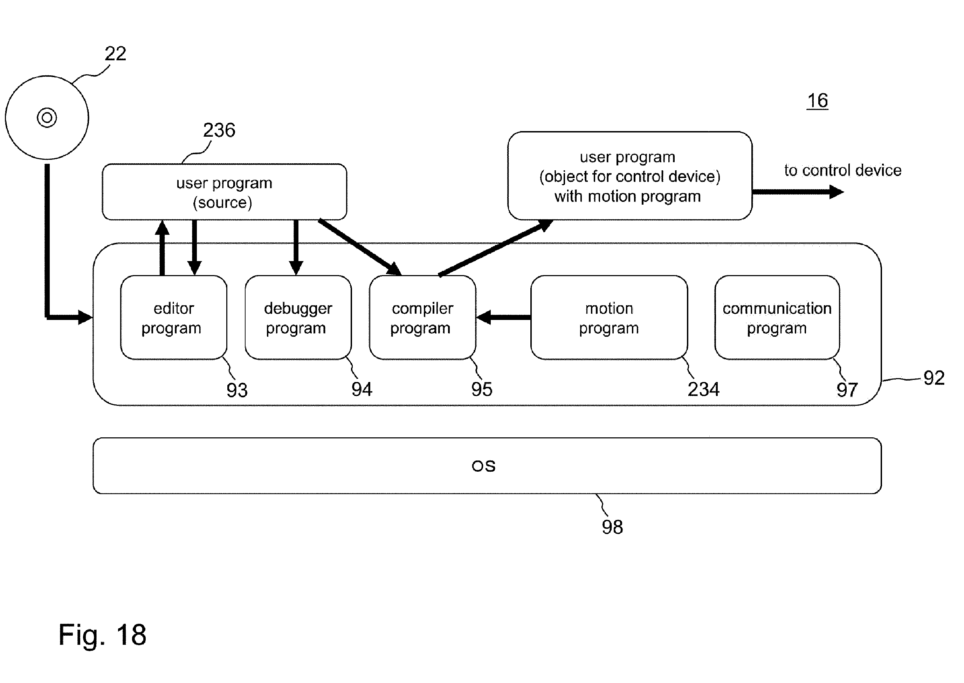

Fig. 18 illustrates a software configuration of the setting device 16. In the setting device 16, an OS 98 is executed, and an environment is provided in which various programs, such as the setting program 92 can be executed.

A control device setting program 92 includes an editor program 93, a compiler program 95, a debugger program 94, a motion program 234 for determining a motion command value, and a communication program 97. The programs contained in the setting program 92 are typically distributed on the CD-ROM 22, and installed in the setting device 16.

The editor program 93 provides a function, such as inputting and editing, for producing a user program 236 for providing an offset value. More specifically, the editor program 93 provides a function of enabling the user to produce a source program for the user program 236 by operating the keyboard 85 or the mouse 86, and in addition, functions of saving and editing the produced source program.

The compiler program 95 provides a function of compiling the user program 236 and the motion program 234 to produce the combined user and motion program 234 in the form of an object program which is executable by the microprocessor 100 of the CPU unit 13.

The debugger program 94 provides a function for debugging the source program for the user program 236. This debugging includes executing a partial range of the source program specified by the user, tracking changes in the value of a variable over time when the source program is being executed, etc.

The communication program 97 provides a function of transferring the user program 236 to the CPU unit 13 of the control device 1.

In this embodiment, the motion program 234 is compiled with the user program 236. In another embodiment, the motion program 234 is stored in the control device 1 in advance, i.e. is previously sent to the control device 1 from the setting device 16, and only the user program 236 is sent to the control device 1.

Although the present invention has been described in accordance with preferred embodiments, it is obvious for the person skilled in the art that modifications are possible in all embodiments.

### LIST OF REFERENCE NUMERALS

- 1: control device
- 2: field network
- 3: tool
- 4: vision sensor
- 5: workpiece
- 6: conveyor
- 7: HMI device
- 8: position detector
- 9: robot
- 10: connection cable
- 11: control device system bus
- 12: power supply unit
- 13: CPU unit
- 14: IO unit
- 15: special units
- 16: setting device
- 17: remote IO terminal
- 18: motors
- 19: servo drivers
- 20: detection switch
- 21: relay
- 22: CD-ROM
- 23: synchronization functionality
- 24: offset functionality
- 25: combination functionality
- 26: inverse kinematics unit
- 27: offset functionality
- 28: combination functionality
- 29: encoders
- 31: current belt position (conveying position)
- 32: belt reference point
- 33: relative workpiece position
- 34: conveyor moving direction
- 35: offset
- 36: synchronization motion command value
- 37: current command position (offset motion command value)
- 38: workpiece reference point
- 39: robot movement
- 40: robot movement
- 41: start position
- 42: end position
- 43: current displacement
- 51: remote IO terminal bus
- 52: communication coupler
- 53: IO units
- 81: CPU
- 82: ROM
- 83: RAM
- 84: hard disk
- 85: keyboard
- 86: mouse
- 87: monitor
- 88: CD-ROM drive
- 89: communication interface
- 92: setting program
- 93: editor program
- 94: debugger program
- 95: compiler program
- 97: communication program
- 98: OS
- 100: microprocessor
- 102: chip set
- 104: main memory
- 106: first and a second storage
- 108: control cycle generator
- 110: USB connector
- 120: control device system bus controller
- 122: control circuit
- 124: control device system bus control circuit
- 126: buffer memory
- 130: control device system bus connector
- 140: field network controller
- 142: DMA control circuit
- 144: field network control circuit
- 146: buffer memory
- 150: field network connector
- 200: real-time OS
- 210: system program
- 212: scheduler program
- 214: output process program
- 216: input process program
- 218: IO process program
- 220: system programs
- 230: control program
- 232: sequence command operation program
- 234: motion programs
- 236: user program

## Claims

1. A control device (1) for controlling motion of a machine (9), the machine (9) having a plurality of degrees of freedom of movement and operating in association with a conveyor (6), the control device (1) comprising:
a control cycle generator (108) configured to generate control cycles;
a conveying position obtaining means (8) configured to obtain a conveying position (31) of the conveyor (6);
a first storage (106) configured to store a synchronization offset motion program (SyncOffset, SyncConveyorOffset);
a second storage (106) configured to store a user program for providing an offset value (35) for at least one of the degrees of freedom of movement, the offset value (35) corresponding to a movement of the machine (9) relative to the conveyor (6), and for enabling the synchronization offset motion program (SyncOffset, SyncConveyorOffset);
a processing means (100) configured to execute the user program, and furthermore configured to repeatedly execute the synchronization offset motion program (SyncOffset, SyncConveyorOffset) in each of the generated control cycles after the user program has enabled the synchronization offset motion program (SyncOffset, SyncConveyorOffset), the synchronization offset motion program being configured:
to obtain a synchronization motion command value (36) for at least one of the degrees of freedom of movement for operating the machine (9) in synchronization with the conveying position (31), and
to determine an offset motion command value (37) by adding the offset value (35) provided by the execution of the user program to the synchronization motion command value (36), and
an output means configured to output the offset motion command value (37) in each of the generated control cycles to the machine (9).

2. The control device (1) according to claim 1, wherein the synchronization offset motion program (SyncConveyorOffset) is further configured to receive the conveying position (31) and calculate the synchronization motion command value (36) based on the conveying position (31) to obtain the synchronization motion command value (36).

3. The control device (1) according to claim 1 or 2, wherein the processing means (100) is configured to provide the offset value (35) in each of the generated control cycles by executing the user program.

4. The control device (1) according to any of claims 1 to 3, further comprising a communication interface configured to receive a sequence of offset values (35).

5. The control device (1) according to any of claims 1 to 4, further comprising a third storage (106) storing a sequence of offset values (35).

6. The control device (1) according to any of claims 1 to 5, wherein, when the user program has enabled the synchronization offset motion program (SyncOffset, SyncConveyorOffset), the synchronization offset motion program (SyncOffset, SyncConveyorOffset) calculates, during a single enablement, a sequence of offset motion command values (37) based on the offset values (35) provided by the user program.

7. The control device (1) according to any of claims 1 to 6, wherein the user program changes the offset value (35) in response to an input from outside the control device (1).

8. The control device (1) according to claim 7, wherein the user program changes the offset value (35) in response to an input from a sensor or in response to a user input.

9. The control device (1) according to any of claims 1 to 8, wherein the synchronization offset motion program (SyncOffset, SyncConveyorOffset) is stored in the first storage (106), and the user program is stored in the second storage (106).

10. A method for controlling motion of a machine (9), the machine (9) having a plurality of degrees of freedom of movement and operating in association with a conveyor (6), the method comprising:
generating control cycles;
obtaining a conveying position (31) of the conveyor (6);
executing a user program for providing an offset value (35) for at least one of the degrees of freedom of movement, the offset value (35) corresponding to a movement of the machine (9) relative to the conveyor (6), the user program enabling a synchronization offset motion program (SyncOffset, SyncConveyorOffset) over a period of time;
repeatedly executing the synchronization offset motion program in each of the generated control cycles after the user program has enabled the synchronization offset motion program (SyncOffset, SyncConveyorOffset), the synchronization offset motion program:
obtaining a synchronization motion command value (36) for at least one of the degrees of freedom of movement for operating the machine (9) in synchronization with the conveying position (31), and
determining an offset motion command value (37) by adding the offset value (35) provided by the execution of the user program to the synchronization motion command value (36), and
outputting the offset motion command value (37) in each of the generated control cycles to the machine (9).

11. A method for controlling motion of a machine (9) according to claim 10, further comprising using a sensor (4) to generate the offset value (35) and providing the offset value (35) to the user program and/or the synchronization offset motion program.

12. A synchronization offset motion program to be executed cyclically by a control device (1) according to any of claims 1 to 9 for controlling motion of a machine (9), the machine (9) having a plurality of degrees of freedom of movement and operating in association with a conveyor (6), the control device (1) being configured to execute a user program which determines a motion of the machine (9), and the control device (1) being configured to output an offset motion command value for each of the degrees of freedom of movement, the synchronization offset motion program comprising:
a first logical interface for receiving an enable instruction from the user program,
a second logical interface for receiving an offset value (35) from the user program,
an obtaining means for obtaining a synchronization motion command value (36) for at least one of the degrees of freedom of movement for operating the machine (9) in synchronization with a conveying position (31) of the conveyor (6), and
a calculating routine for obtaining an offset motion command value (37) to be output from the control device (1) by adding the offset value (35) provided by the execution of the user program to the synchronization motion command value (36).

13. A synchronization offset motion program for a control device (1) according to any of claims 1 to 9, the synchronization offset motion program performing the following steps when being executed on the processing means (100) of the control device (1):
obtaining a synchronization motion command value (36) for at least one of the degrees of freedom of movement for operating the machine (9) in synchronization with a conveying position (31) of the conveyor (6);
receiving an offset value (35) from the user program;
calculating an offset motion command value (37) by adding the offset value (35) to the synchronization motion command value (36); and
outputting the offset motion command value (37).

14. A recording medium storing the synchronization offset motion program according to claim 11 or 12.
